# EUROPEAN PATENT SPECIFICATION

(11) **EP 4 050 542 B1**
(45) Date of publication and mention of the grant of the patent: **27.09.2023**
(21) Application number: 21809900.0
(22) Date of filing: 10.02.2021
(51) Int. Cl.: G06Q 20/38, G06F 21/64, A63F 13/792

(54) **BLOCKCHAIN-BASED DATA PROCESSING METHOD AND APPARATUS, AND DEVICE AND READABLE STORAGE MEDIUM**
BLOCKCHAIN-BASIERTES DATENVERARBEITUNGSVERFAHREN UND -GERÄT SOWIE VORRICHTUNG UND LESBARES SPEICHERMEDIUM
PROCÉDÉ ET APPAREIL DE TRAITEMENT DE DONNÉES BASÉS SUR UNE CHAÎNE DE BLOCS, ET DISPOSITIF ET SUPPORT DE STOCKAGE LISIBLE

(30) Priority: 31.12.2020 CN 202011638010
(43) Date of publication of application: 31.08.2022
(73) Proprietor: ICALC HOLDINGS LIMITED, Hong Kong 999077 (HK)
(72) Inventor: POON, Ho Man, Hong Kong 999077 (CN)
(74) Representative: Ipside
(86) International application number: PCT/CN2021/076522
(87) International publication number: WO 2022/141770

(56) References cited:
- WO-A1-2020/102401
- WO-A1-2020/210076
- CN-A- 111 339 565
- CN-A- 111 402 033
- CN-A- 112 100 594

## Description

### TECHNICAL FIELD

This disclosure relates to the field of computer technology, and more particularly, to a block chain-based data processing method and apparatus, a device, and a readable storage medium.

### BACKGROUND

Real-right transfer means that a first user with ownership of an item transfers a mortgage right of the item to a second user, so that the first user can obtain corresponding virtual-asset data from the second user based on the real-right transfer of the item. When the first user has a requirement to transfer a real right of an item, the second user usually audits related data of the item (for example, virtual-asset associated data) offline.

However, in this offline audit method, it is difficult to avoid the authenticity of data to be audited being changed due to malicious manipulation by an assessor in the progress of auditing. When there exists malicious collusion between the assessor and an applicant, the assessor may determine a virtual-asset value of the item as an excess value through falsified data after manipulation. In other words, in this offline audit method, it is difficult to ensure the security of service data, which makes a real-right transfer service of the item not secure. The document CN 112100.594, 18th December 2020 (2020-12-18), discloses a secure data processing method based on a blockchain and smart contracts.

### SUMMARY

Disclosed herein are implementations of a block chain-based data processing method and apparatus, a device, and a readable storage medium, which can ensure the security of service data and improve the security in transferring real right of an item.

A block chain-based data processing method is provided in an aspect of implementations of the disclosure. The method includes the following. A real-right transfer request sent by a first service node is obtained, where the real-right transfer request carries virtual-asset associated data of navigation equipment and is used to request to transfer a subsidiary right of the navigation equipment, where a user who has ownership of the navigation equipment has a usage right of the navigation equipment after the subsidiary right is transferred, and the virtual-asset associated data is created by the user who has the ownership of the navigation equipment according to a data creation right. A smart contract is triggered according to the real-right transfer request and a set of second service nodes matching the real-right transfer request is obtained through the smart contract. A right detection function name and a right detection statement are created according to a node identity of each service node in the set of second service nodes and a data access right for the virtual-asset associated data, and the right detection function name and the right detection statement are deployed into the smart contract to obtain a service smart contract. The right detection function name in the service smart contract is called according to a data access request for the virtual-asset associated data from a first target service node upon obtaining the data access request, and a data access right of the first target service node is detected through the right detection statement corresponding to the right detection function name. The first target service node is determined to belong to the set of second service nodes upon detecting that the first target service node has the data access right for the virtual-asset associated data, the virtual-asset associated data is read, and the read virtual-asset associated data is returned to the first target service node.

A block chain-based data processing apparatus is provided in an aspect of implementations of the disclosure. The apparatus includes a request obtaining module, a set obtaining module, a statement creating module, a contract deploying module, a function calling module, a right detecting module, a data reading module, and a data returning module.

The request obtaining module is configured to obtain a real-right transfer request sent by a first service node, where the real-right transfer request carries virtual-asset associated data of navigation equipment and is used to request to transfer a subsidiary right of the navigation equipment, where a user who has ownership of the navigation equipment has a usage right of the navigation equipment after the subsidiary right is transferred, and the virtual-asset associated data is created by the user who has the ownership of the navigation equipment according to a data creation right. The set obtaining module is configured to trigger a smart contract according to the real-right transfer request and obtain through the smart contract a set of second service nodes matching the real-right transfer request. The statement creating module is configured to create a right detection function name and a right detection statement according to a node identity of each service node in the set of second service nodes and a data access right for the virtual-asset associated data. The contract deploying module is configured to deploy the right detection function name and the right detection statement into the smart contract to obtain a service smart contract. The function calling module is configured to call the right detection function name in the service smart contract according to a data access request for the virtual-asset associated data from a first target service node upon obtaining the data access request. The right detecting module is configured to detect data access right of the first target service node through the right detection statement corresponding to the right detection function name. The data reading module is configured to determine that the first target service node belongs to the set of second service nodes upon detecting that the first target service node has the data access right for the virtual-asset associated data, and read the virtual-asset associated data. The data returning module is configured to return the read virtual-asset associated data to the first target service node.

In an implementation, the virtual-asset associated data further includes a digital signature, the digital signature is obtained by signing the virtual-asset associated data according to a private key of the first service node, and the apparatus further includes a signature-verification data obtaining module, a signature verifying module, and an operation proceeding module.

The signature-verification data obtaining module is configured to obtain a public key of the first service node, the virtual-asset associated data, and the digital signature. The signature verifying module is configured to verify the digital signature of the virtual-asset associated data according to the public key. The operation proceeding module is configured to generate a first block according to the virtual-asset associated data when the digital signature is a legal signature, and proceed to triggering the smart contract according to the real-right transfer request, and obtaining through the smart contract the set of second service nodes matching the real-right transfer request when the first block is successfully added to a block chain, where the block chain is a block chain to which the smart contract belongs.

In an implementation, the statement creating module is further specifically configured to determine, according to the real-right transfer request, that a type of a contract to be created corresponding to the set of second service nodes is a right-querying contract type; obtain a target logic code template that matches the right-querying contract type from a code template library, where the code template library includes logic code templates corresponding to M contract types, the M contract types include the right-querying contract type, M being a positive integer; obtain the node identity of each service node in the set of second service nodes, use the node identity of each service node in the set of second service nodes and a data identity set of the virtual-asset associated data as a variable, and fuse the variable and the target logic code template to obtain a right-querying logic code corresponding to virtual-asset data; determine the right-querying logic code as the right detection statement, and configure a corresponding right detection function name for the right detection statement.

In an implementation, the right detecting module is further specifically configured to query a data storage associated with the virtual-asset associated data through the right detection statement, where the data storage is used to store the node identity of each service node in the set of second service nodes; send a data reading request to the data storage, and receive the node identity of each service node in the set of second service nodes returned by the data storage in response to the data reading request; compare a service node identity of the first target service node with the node identity of each service node in the set of second service nodes, and broadcast a matching result in a consensus network, so that a consensus node in the consensus network votes on the matching result; detect the data access right of the first target service node according to the matching result and a voting result of the consensus node.

In an implementation, the right detecting module is further specifically configured to determine that the first target service node has the data access right for the virtual-asset associated data when the matching result is a successful matching result and the voting result is a vote passed; determine that the first target service node does not have the data access right for the virtual-asset associated data when the matching result is a successful matching result and the voting result is a voting not passed; determine that the first target service node does not have the data access right for the virtual-asset associated data when the matching result is a failed matching result and the voting result is a vote passed; determine that the first target service node has the data access right for the virtual-asset associated data when the matching result is a failed matching result and the voting result is that a vote not passed.

In an implementation, the first target service node stores block header information of each block in the block chain, and the block chain is a block chain to which the service smart contract belongs. The data returning module is further specifically configured to obtain a target block to which the virtual-asset associated data belongs, obtain a corresponding hash value and a Merkel tree path in the target block, where the hash value includes a first hash value of the virtual-asset associated data and a second hash value of transaction data stored in the target block, where the transaction data is different from the virtual-asset associated data; return the hash value and the Merkel tree path to the first target service node, so that the first target service node generates a first Merkel tree root according to the hash value and the Merkel tree path, compares the first Merkel tree root with a second Merkel tree root in a block header of the target block, and stores the virtual-asset associated data when the matching result is that the first Merkel tree root is the same with the second Merkel tree root.

In an implementation, the real-right transfer request further includes an applied virtual-asset value, and the apparatus further includes a message receiving module, an account sending module, an identity determining module, and a target smart contract deploying module.

The message receiving module is configured to send the real-right transfer request to the set of second service nodes and receive a real-right transfer confirmation message sent by a second target service node, where the set of second service nodes includes the second target service node. The account sending module is configured to obtain an account address of the user with the ownership of the navigation equipment according to the real-right transfer confirmation message and send the account address to the second target service node, so that the second target service node transfers virtual-asset data corresponding to the applied virtual-asset value to the account address. The identity determining module is configured to receive an asset reception confirmation message for the virtual-asset data sent by the first service node and obtain a target node identity of the second target service node according to the asset reception confirmation message. The target smart contract deploying module is configured to create a target right detection function name and a target right detection statement according to the target node identity and a data update right for the virtual-asset associated data, and deploy the target right detection function name and the target right detection statement into the service smart contract to obtain a target service smart contract.

In an implementation, the apparatus further includes a contract calling module, an update right detecting module, and a data updating module.

The contract calling module is configured to call the target right detection function name in the target service smart contract according to a data update request for the virtual-asset associated data from a third target service node upon obtaining the data update request, where the data update request carries update data, and the update data is used to update the virtual-asset associated data. The update right detecting module is configured to detect a data update right of the third target service node through the target right detection statement corresponding to the target right detection function name. The data updating module is configured to determine that the third target service node is the same with the second target service node upon detecting that the third target service node has the data update right for the virtual-asset associated data, and updating the virtual-asset associated data according to the update data.

In an implementation, the data updating module is further specifically configured to obtain an update data identity of the update data; obtain a data identity set of the virtual-asset associated data, compare the data identity set with the update data identity, and obtain a target data identity matching the update data identity from the data identity set; obtain associated data corresponding to the target data identity from the virtual-asset associated data, and replace the associated data corresponding to the target data identity with the update data.

In an implementation, the apparatus further includes a record generating module and a block adding module. The record generating module is configured to generate a data update record for the third target service node and the virtual-asset associated data according to the third target service node, the update data, and the associated data corresponding to the target data identity. The block adding module is configured to generating a second block according to the data update record, and adding the second block to the block chain, where the block chain is a block chain to which the target service smart contract belongs.

A computer device is provided in an aspect of implementations of the disclosure. The computer device includes a processor and a memory. The memory is configured to store computer programs. The computer programs, when executed by the processor, cause the processor to perform the method in implementations of the disclosure.

A computer-readable storage medium is provided in an aspect of implementations of the disclosure. The computer-readable storage medium is configured to store computer programs, and the computer programs include program instructions which, when executed by a processor, are operable with the processor to perform the method in implementations of the disclosure.

A computer program product or computer programs are provided in an aspect of the disclosure. The computer program product or computer programs include computer instructions which are stored in a computer-readable storage medium. A processor of a computer device is configured to read the computer instructions from the computer-readable storage medium. The computer instructions, when executed by the processor, cause the processor to perform the method described in an aspect of implementations of the disclosure.

In implementations of the disclosure, virtual-asset associated data carried in a real-right transfer request for navigation equipment can be stored in a block chain. Because the block chain is immutable or unforgeable, the authenticity of the virtual-asset associated data can be well ensured through the block chain. In addition, with this disclosure, a data access right can be assigned to a service node matching the real-right transfer request by generating a right detection function statement and a right detection function name. Only a service node with the data access right can access the virtual-asset associated data, which can further enhance the security and the opacity of the virtual-asset associated data, thereby making real-right transfer service based on the virtual-asset associated data more secure. It can be seen that by means of the present disclosure, the security of service data (for example, the virtual-asset associated data) can be improved through the block chain, thereby improving the security of the real-right transfer service of an item.

### BRIEF DESCRIPTION OF THE DRAWINGS

FIG. 1 is a schematic diagram illustrating a network architecture provided in implementations of the disclosure.
FIG. 2 is a schematic flowchart illustrating a block chain-based data processing method provided in implementations of the disclosure.
FIG. 3 is a schematic diagram of creation of a right detection statement provided by in implementations of the disclosure.
FIG. 4 is a schematic diagram of a scenario for creating a right detection statement provided in implementations of the disclosure.
FIG. 5 is a schematic structural diagram illustrating a block chain-based data processing apparatus provided in implementations of the disclosure.
FIG. 6 is a schematic structural diagram illustrating a computer device provided in implementations of the disclosure.

### DETAILED DESCRIPTION

Technical solution in implementations of the present disclosure will be described clearly and completely with reference to accompanying drawings in implementations of the present disclosure. It can be understood that, implementations described herein are merely some implementations, rather than all implementations, of the present disclosure. All other implementations obtained by those of ordinary skill in the art based on the implementations described herein without creative effort shall fall within the protection scope of the disclosure.

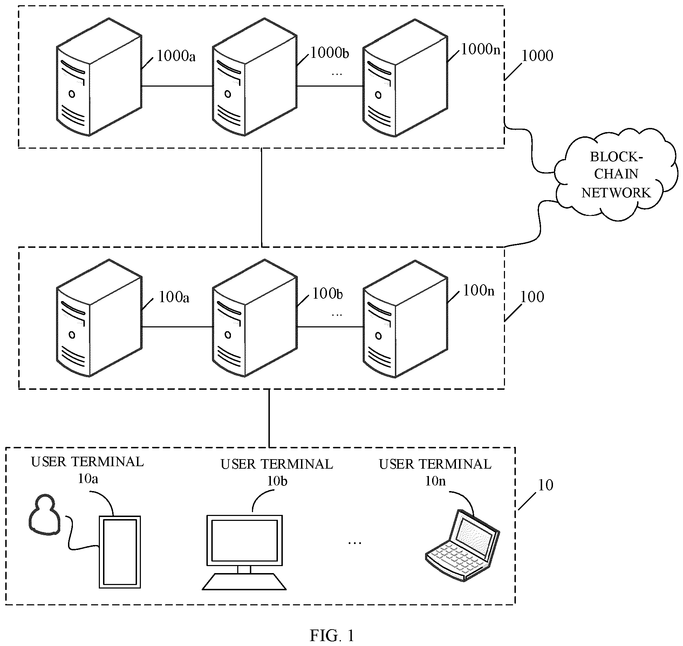

Reference is made to FIG. 1, which is a schematic diagram illustrating a network architecture provided in implementations of the disclosure. A block chain is a new application model of computer technologies such as distributed data storages, peer-to-peer transmissions, consensus mechanisms, and cryptographic algorithms. The block chain is mainly used to organize data in chronological order and encrypt the data into an account book, thereby making the data non-tamperable and unforgeable, and can verify, store, and update data. The block chain is essentially a decentralized database. Each node in the database stores a same block chain. A block-chain network categorizes nodes into a core node, a data node, and a light node. The core node is responsible for a consensus of the whole block-chain network, that is, the core node is a consensus node in the block-chain network. The data node is responsible for synchronizing account-book information of the core node, that is, synchronizing the latest block data. The light node belongs to a service node and is responsible for synchronizing service-related block data from the data node. A process of writing transaction data in the block-chain network into the account book may include the following. The transaction data is transmitted by a client to the data node or light node, and then the transaction data is transmitted by the data node and the light node in the block-chain network in the form of baton. Until the transaction data is received by the consensus node, the consensus node packs the transaction data into a block, makes a consensus with other consensus nodes, and writes the block carrying the transaction data into the account book after the consensus is passed.

It can be understandable that a block-chain system can include a smart contract, which can be understood as a kind of code that can be understood and executed by each node (including the consensus node) of the block chain in the block-chain system, where any logic can be executed to get a result. A user can initiate a transaction service request through a client, the smart contract that has been deployed into the block chain is called. Then, the data node or light node on the block chain can send the transaction service request to the consensus node (s), and each consensus node on the block chain can run the smart contract separately. It should be understood that one or more smart contracts can be included in the block chain, and these smart contracts can be distinguished by an identity (ID) number or a name. The transaction service request initiated by the client can also carry the ID number or the name of the smart contract, so as to specify a smart contract to be executed on the block chain. If a smart contract specified by the client is a contract that needs to read data, each consensus node will access a local account book to read data, and finally each consensus node will verify whether execution results are consistent (that is, perform consensus). If the execution results are consistent, the execution results can be stored in their local account books respectively and returned to the client.

As illustrated in FIG. 1, the network architecture may include a core node (consensus node) cluster 1000, a data node cluster or light node cluster 100, and a user terminal (client) cluster 10. The core node cluster 1000 may include at least two core nodes, and the light node 100 may include at least two data nodes. As illustrated in FIG. 1, the core node cluster 1000 may include a core node 1000a, a core node 1000b, ..., and a core node 1000n. Specifically, the data node cluster 100 may include a light node 100a, a light node 100b, ..., and a light node 100n. Specifically, the user terminal cluster 10 may include a user terminal 10a, a user terminal 10b, ..., and a user terminal 10n.

As illustrated in FIG. 1, the user terminal 10a, the user terminal 10b, ..., and the user terminal 10n can respectively perform network connection with the light node 100a, the light node 100b, ..., and the light node 100n, such that the user terminal can perform data interaction with the data node via the network connection. The light node 100a, the light node 100b, ..., and the light node 100n can respectively perform network connection with the core node 1000a, the core node 1000b, ..., and the core node 1000n, such that the data node can perform data interaction with the core node via the network connection. The light node 100a, the light node 100b, ..., and the light node 100n are connected with each other, such that the data nodes can interact with each other. The core node 1000a, the core node 1000b, ..., and the core node 1000n are connected with each other, such that the core nodes can interact with each other.

Take the user terminal 10a, the light node 100a, and the core node 1000a as an example. The light node 100a can receive a transaction service request transmitted by the user terminal 10a, and the transaction service request carries the ID number or the name of the smart contract. Then the light node 100a can transmit the transaction service request to the core node 1000a via the light node 100. The core node 1000a can run the smart contract and execute a transaction service through the smart contract. After obtaining an execution result, the core node 1000a can store the execution result into a memory pool (e.g., a transaction pool) and generate a new block according to the execution result. The core node 1000a can respectively transmit the newly generated block to other core nodes in block-chain network where the core node 1000a is located according to node identities of the other core nodes (i.e., consensus nodes) in the block-chain network. The other core nodes can perform verification (i.e., perform consensus) on the newly generated block and add the newly generated block into the block chain to which the newly generated block belong after the verification is completed (in other words, the execution result is stored in the block chain after the consensus is passed). Each core node in the block-chain network has a corresponding node identity, and can store the node identities of the other core nodes in the block-chain network. As such, according to the node identities of the other core nodes, the newly generated block can be broadcasted to the other core nodes in the block-chain network, such that transaction data stored on all core nodes in the block-chain network is consistent.

After the core node receives a transaction request sent by the user terminal (for example, a real-right transfer request for navigation equipment), with this disclosure, a right detection statement for associated service nodes associated with the real-right transfer request can be automatically generated, and the right detection statement can be deployed into the smart contract to obtain a service smart contract. It should be understood that, the meaning of the right detection statement deployed into the service smart contract is to assign a data access right to these associated service nodes, and only these associated service nodes can access virtual-asset associated data of the navigation equipment (the virtual-asset associated data is carried during real-right transfer). In view of this, when the core node receives a data access request for the virtual-asset associated data of the navigation equipment sent by other service node, the core node can call the service smart contract and use a right-querying logic code in the service smart contract to detect whether the other service node has an access right for virtual-asset data. It should be understood that with this disclosure, service data in a real-right transfer service of the navigation equipment (for example, the virtual-asset associated data of the navigation equipment) can be stored in the block chain, and because the block chain is non-tamperable, unforgeable, and untraceable, the security, authenticity and traceability of these service data can be ensured. At the same time, the data access right can be assigned to associated service nodes by automatically generating a right detection statement, which can strengthen the protection of these service data and improve the security of the service data, thereby further guaranteeing the security of the real-right transfer service of the navigation equipment.

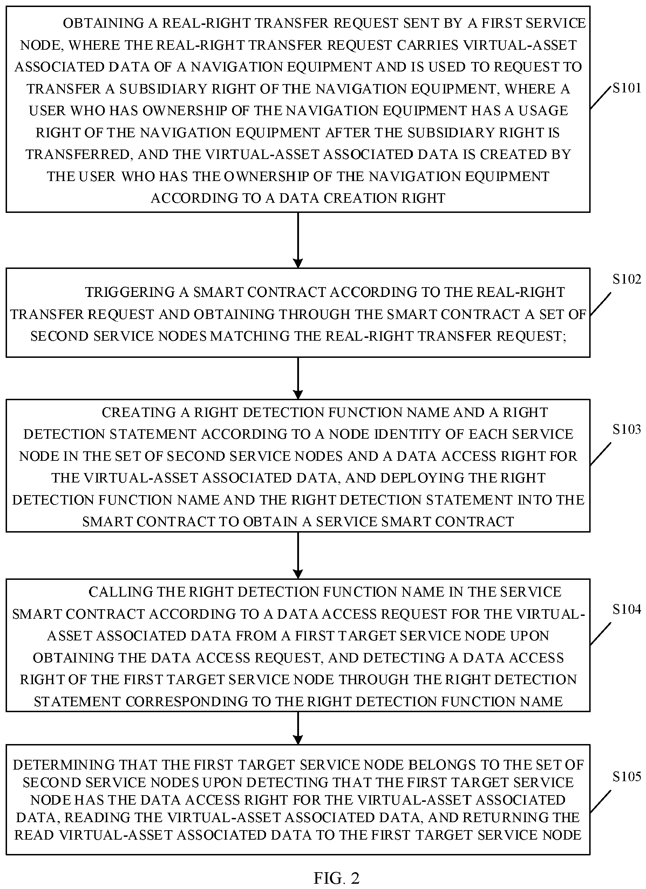

For implementations of generating the right detection statement and implementations of detecting a data access right of a service node through the right detection statement, reference can be made to descriptions in subsequent implementations corresponding to FIG. 2.

It is understandable that the method provided in the implementations of the present disclosure can be executed by a computer device, and the computer device includes but is not limited to a terminal or a server. A node in the implementations of the present disclosure may be a computer device.

Further, reference can be made to FIG. 2, which is a schematic flowchart illustrating a block chain-based data processing method provided in implementations of the disclosure. The method can be executed by a block-chain node (for example, a core node in above implementations corresponding to FIG. 1), or by a block-chain node and a user terminal (for example, a user terminal in above implementations corresponding to FIG. 1) together.

The following will take the method executed by a block-chain node as an example for description, and the block chain-based data processing method may at least include following operations at S 101 to S 105.

At 101, a real-right transfer request sent by a first service node is obtained, where the real-right transfer request carries virtual-asset associated data of navigation equipment and is used to request to transfer a subsidiary right of the navigation equipment, where a user who has ownership of the navigation equipment has a usage right of the navigation equipment after the subsidiary right is transferred, and the virtual-asset associated data is created by the user who has the ownership of the navigation equipment according to a data creation right.

In this disclosure, the block-chain node may be a core node in a block chain, and the core node may receive a transaction request (for example, a real-right transfer request) sent by a data node or light node in the block chain, and the data node or light node can the receive transaction request sent by a user terminal. The transaction request may be a request generated by user terminal according to a transaction service initiated by a user. The first service node in this disclosure can be a light node. The navigation equipment in this disclosure can refer to equipment that can be used for navigation (for example, an airplane), and the navigation equipment can also refer to related equipment used to provide navigation capabilities for a navigation process, for example, the related equipment may refer to an engine, related parts of an airplane (for example, a landing gear, a fuselage, etc.), an auxiliary power unit (APU) of an airplane, and other equipment used to provide navigation capabilities for navigation of airplane. Regarding navigation equipment, examples will not be given one by one herein.

It should be understood that the user (who has the ownership of the navigation equipment) can initiate a real-right transfer request for the navigation equipment through the user terminal. The real-right transfer request may be a request to transfer a subsidiary right of the navigation equipment, and the subsidiary right may refer to a mortgage right. If the user has the ownership of the navigation equipment, the user will have the data creation right for the virtual-asset data of the navigation equipment. When the user has the data creation right, the user can create the virtual-asset associated data of the navigation equipment, that is, the user can input the virtual-asset associated data of the navigation equipment. The virtual-asset associated data can include navigation data of the navigation equipment, virtual-asset damage data (for example, data of accidents such as fire, fall, etc., and data of loss of navigation certification data), and historical maintenance data of an engine (for example, historical maintenance data of repairing the navigational equipment), a temporary usage contract for the navigational equipment (lease data of the navigational equipment), and delivery documents, etc. Subsequently, the user terminal can send the real-right transfer request and the virtual-asset associated data of the navigation equipment to the first service node.

In this disclosure, after receiving the real-right transfer request and the virtual-asset associated data, the first service node can send the real-right transfer request and the virtual-asset associated data to the block-chain node. At this time, the first service node can sign (that is, encrypt) the virtual-asset associated data based on a private key of the first service node to obtain a digital signature, and then the first service node can send the real-right transfer request, the virtual-asset associated data, and the digital signature to the block-chain node.

At 102, a smart contract is triggered according to the real-right transfer request and a set of second service nodes matching the real-right transfer request is obtained through the smart contract.

In this disclosure, the set of second service nodes may refer to a set of service nodes corresponding to a provider(s) (for example, xx bank) used to provide virtual-asset data. A second service node may be the aforementioned light node. The block-chain node may first verify the digital signature, and after this verification is passed, proceed to obtaining the set of second service nodes, which may be implemented as follows. A public key of the first service node, the virtual-asset associated data, and the digital signature are obtained. The digital signature of the virtual-asset associated data is verified according to the public key. A first block is generated according to the virtual-asset associated data when the digital signature is a legal signature, and when the first block is successfully added to a block chain, proceed to triggering the smart contract according to the real-right transfer request, and obtaining through the smart contract the set of second service nodes matching the real-right transfer request. The block chain is a block chain to which the smart contract belongs.

At 103, a right detection function name and a right detection statement are created according to a node identity of each service node in the set of second service nodes and a data access right for the virtual-asset associated data, and the right detection function name and the right detection statement are deployed into the smart contract to obtain a service smart contract.

In this disclosure, the right detection function name and the right detection statement can be created as follows. A type of a contract to be created corresponding to the set of second service nodes is determined to be a right-querying contract type according to the real-right transfer request. A target logic code template that matches the right-querying contract type is obtained from a code template library, where the code template library includes logic code templates corresponding to M contract types, the M contract types include the right-querying contract type, M being a positive integer. The node identity of each service node in the set of second service nodes is obtained, the node identity of each service node in the set of second service nodes and a data identity set of the virtual-asset associated data are used as a variable, and the variable and the target logic code template are fused to obtain a right-querying logic code corresponding to virtual-asset data. The right-querying logic code is determined as the right detection statement, and a corresponding right detection function name is configured for the right detection statement.

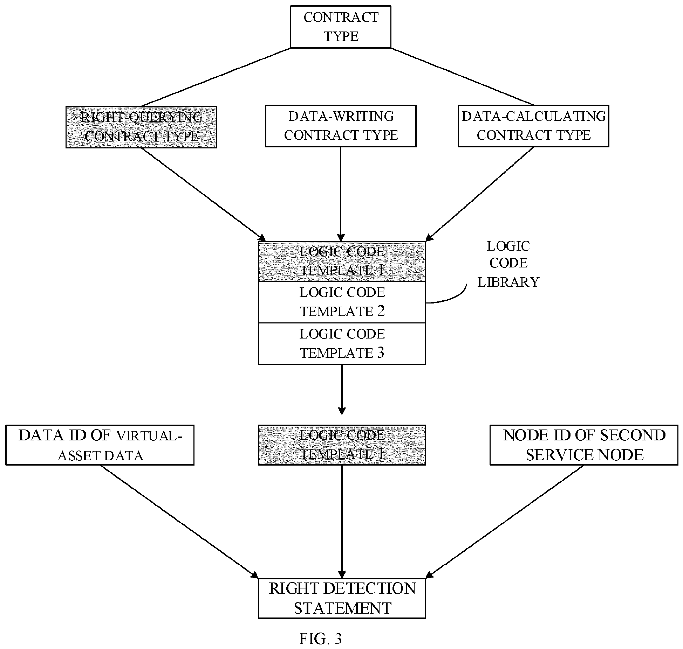

In order to facilitate understanding of an implementation of creating a right detection statement, please refer to FIG. 3 together, which is a schematic diagram of creation of a right detection statement provided by in implementations of the disclosure provided in implementations of the present disclosure. As illustrated in FIG. 3, types of a contract to be created can include a right-querying contract type, a data-writing contract type, and a data-calculating contract type. The code template library includes logic code template 1 corresponding to the right-querying contract type, logical code template 2 corresponding to the data-writing contract type, and logical code template 3 corresponding to the data-calculating contract type. A data right (for example, a data access right, a data update right, etc.) of service data can be assigned through logic code template 1. For example, the node identity of each service node in the set of second service nodes and the data identity set of the virtual-asset associated data are fused with logic code template 1 to obtain the target logic code, which can be understood as that the data access right for the virtual-asset associated data is assigned to each second service node in the set of second service nodes, that is, only these second service nodes can access the virtual-asset associated data, and other service nodes except the set of second service nodes cannot access the virtual-asset associated data. Logic code template 2 can be used to write data (that is, to write data to the storage). Logic code template 3 can be used to for data calculation (for example, data subtraction).

It should be understood that the set of second service nodes is a node(s) corresponding to a virtual-asset provider. After receiving the real-right transfer request for the navigation equipment, the block-chain node needs to assign a data-querying request for the virtual-asset associated data of the navigation equipment to a node corresponding to the virtual-asset provider (that is, the set of second service nodes), and determines the type of the contract to be created corresponding to the set of second service nodes is the right-querying contract type. A logical code template corresponding to the type of the contract to be created is determined to be logical code template 1 through the code template library, then the node identity of each service node in the set of second service nodes, the data identity set of the virtual-asset associated data, and logical code template 1 can be fused, and a code obtained by fusion can be used as the right detection statement of the set of second service nodes. Subsequently, a right detection function name can be configured for the right detection statement. The right detection statement can be called subsequently by calling the right detection function name.

It should be noted that, in addition to the above-mentioned right-querying contract type, the type of a contract to be created can also include other contract types with a service execution logic (for example, a data-calculating contract type, etc.).

At 104: upon obtaining a data access request for the virtual-asset associated data from a first target service node, the right detection function name in the service smart contract is called according to the data access request, and a data access right of the first target service node is detected through the right detection statement corresponding to the right detection function name.

In this disclosure, the data access right of the first target service node can be detected through the right detection statement corresponding to the right detection function name as follows. A data storage associated with the virtual-asset associated data is queried through the right detection statement, where the data storage is used to store the node identity of each service node in the set of second service nodes. A data reading request is sent to the data storage, and the node identity of each service node in the set of second service nodes returned by the data storage in response to the data reading request is received. A service node identity of the first target service node is compared with the node identity of each service node in the set of second service nodes, and a matching result is broadcasted in a consensus network, so that a consensus node in the consensus network votes on the matching result. The data access right of the first target service node is detected according to the matching result and a voting result of the consensus node.

It should be understood that the matching result is an execution result of the block-chain node, and if the matching result is a successful matching result (that is, there exists a node in the set of second service nodes with the node same ID as the service node ID of the first target service node), and the voting result is a vote passed, it can indicate that execution results of more than 2/3 of consensus nodes in the consensus network are also the matching successful result, then the successful matching result can be regarded as a final execution result, and the first target service node is determined to have the data access right for the virtual-asset associated data. If the matching result is a successful matching result, and the voting result is a vote not passed, it can indicate that execution results of more than 2/3 of the consensus nodes in the consensus nodes is an unsuccessful matching (a filed matching result), the unsuccessful matching result can be used as the final execution result, and the first target service node is determined not to have the data access right for the virtual-asset associated data. If the matching result is a failed matching result (that is, there does not exist a node in the set of second service nodes with the same node ID as the service node ID of the first target service node), and the voting result is a vote passed, it indicates that execution results of more than 2/3 of the consensus nodes in the consensus network is the failed matching result, the failed matching result can be used as the final execution result, and the first target service node is determined not to have the data access right for the virtual-asset associated data. If the matching result is the failed matching result, and the voting result is a vote not passed, it indicates that execution results of more than 2/3 of the consensus nodes in the consensus nodes are the successful matching result, then the successful matching result can be used as the final execution result, and the first target service node is determined to have the data access right for the virtual-asset associated data.

At 105, the first target service node is determined to belong to the set of second service nodes upon detecting that the first target service node has the data access right for the virtual-asset associated data, the virtual-asset associated data is read, and the read virtual-asset associated data is returned to the first target service node.

In this disclosure, when the first target service node is determined to have the data access right for the virtual-asset associated data, the virtual-asset associated data can be read (for example, a block to which the virtual-asset associated data belongs can be obtained first, and the virtual-asset associated data in the block is read), and then the read virtual-asset associated data can be returned to the first target service node. The read virtual-asset associated data can be returned to the first target service node as follows.

A target block to which the virtual-asset associated data belong is obtained. A corresponding hash value and a Merkel tree path in the target block are obtained, where the hash value includes a first hash value of the virtual-asset associated data and a second hash value of transaction data stored in the target block, where the transaction data is different from the virtual-asset associated data. The hash value and the Merkel tree path are returned to the first target service node, so that the first target service node generates a first Merkel tree root according to the hash value and the Merkel tree path, compares the first Merkel tree root with a second Merkel tree root in a block header of the target block, and stores the virtual-asset associated data when the matching result is that the first Merkel tree root is the same with the second Merkel tree root. It should be understood that the first target service node is a light node, and the light node can store block header information of each block in the block chain. When receiving the virtual-asset associated data, the first target service node can verify the virtual-asset associated data through two Merkel tree roots, a Merkel tree root of the block header information of the virtual-asset associated data and a Merkel tree root generated according to the received hash value and a Merkel path, so as to confirm whether the virtual-asset associated data has been tampered with during a transmission process. If the two Merkel tree roots are consistent, the virtual-asset associated data has not been tampered with; if the two Merkel tree roots are inconsistent, the virtual-asset associated data has not been tampered with, and the first target service node can store and access the virtual-asset associated data.

It should be understood that the real-right transfer request is for transfer of the real right of the navigation equipment. Based on the real-right transfer of the navigation equipment, the user with the ownership can obtain corresponding virtual-asset data from the virtual-asset provider. The real-right transfer request also includes an applied virtual-asset value, and the applied virtual-asset value is virtual-asset data that the user with the ownership of the navigation equipment expects to obtain through the real-right transfer. The block-chain node can send the real-right transfer request and the applied virtual-asset value to the set of second service nodes (at the same time, the set of second service nodes is assigned the data access right for the virtual-asset associated data of the navigation equipment). Each second service node (each virtual-asset provider) in the set of second service nodes can access the virtual-asset associated data based on the real-right transfer request and the data access right, and determine whether to provide the user with the ownership of the navigation equipment with the virtual-asset data corresponding to the applied virtual-asset value. If there is a second service node in the set of second service nodes agrees to provide the user with the ownership of the navigation equipment with the virtual-asset data corresponding to the applied virtual-asset value, the second service node can send a real-right transfer confirmation message to the block-chain node, and the second service node is the second target service node. Subsequently, the block-chain node can perform subsequent processing according to the real-right transfer confirmation message. Specifically, the real-right transfer request is sent to the set of second service nodes and the real-right transfer confirmation message sent by a second target service node is received, where the set of second service nodes includes the second target service node. An account address of the user with the ownership of the navigation equipment is obtained according to the real-right transfer confirmation message and the account address is sent to the second target service node, so that the second target service node transfers virtual-asset data corresponding to the applied virtual-asset value to the account address. An asset reception confirmation message for the virtual-asset data sent by the first service node is received and a target node identity of the second target service node is obtained according to the asset reception confirmation message. A target right detection function name and a target right detection statement are created according to the target node identity and a data update right for the virtual-asset associated data, and the target right detection function name and the target right detection statement are deployed into the service smart contract to obtain a target service smart contract.

It should be understood that after receiving the real-right transfer confirmation message sent by the second target service node, the block-chain node may send the account address of the user with the ownership of the navigation equipment to the second target service node, and the second target service node can notify a user to transfer the virtual-asset data corresponding to the applied virtual-asset value to the account address of the user with the ownership of the navigation equipment. For example, the second target service node can generate a virtual-asset transfer prompt message based on the account address, and push the virtual-asset transfer prompt message to the corresponding virtual-asset provider. The virtual-asset provider can transfer the virtual-asset data corresponding to the applied virtual-asset value to the account address of the user with the ownership of the navigation equipment after receiving the virtual-asset transfer prompt message. After successfully obtaining the virtual-asset data, the user with the ownership of the navigation equipment can send an asset reception confirmation message to the block-chain node through the first service node. After receiving the asset reception confirmation message, the block-chain node can transfer the subsidiary right (mortgage right) of the navigation equipment to the second target service node (virtual-asset provider). At the same time, the block-chain node can create the target right detection function name and the target right detection statement based on the target node identity of the second target service node and the data update right for the virtual-asset associated data, that is, assign the data update right for the virtual-asset associated data of the navigation equipment to the second target service node. In other words, only the second target service node has the right to update and modify the virtual-asset associated data, and other service nodes do not have this right. an implantation of creating the target right detection function name and target right detection statement based on the target node identity of the second target service node and the data update right for the virtual-asset associated data is the same as the above-mentioned implementation of creating the right detection function name and the right detection statement according to the node identity of each service node in the set of second service nodes and the data access right for the virtual-asset associated data, which will not be repeated herein. It should be understood that the target right detection function name corresponding to the second target service node herein is different from the right detection function name corresponding to the set of second service nodes, and the target right detection statement corresponding to the second target service node herein is also different from the right detection statement corresponding to the set of service nodes.

It should be understood that the target right detection statement can be used to detect the data update right of the service node, and only when detection passes, the service node can be allowed to update the virtual-asset associated data. Specifically, upon obtaining the data update request for the virtual-asset associated data from a third target service node, the target right detection function name in the target service smart contract is called according to the data update request, where the data update request carries update data, and the update data is used to update the virtual-asset associated data. A data update right of the third target service node is detected through the target right detection statement corresponding to the target right detection function name. The third target service node is determined to be the same with the second target service node upon detecting that the third target service node has the data update right for the virtual-asset associated data, and the virtual-asset associated data is updated according to the update data. The data update right of the third target service node can be detected as follows. A storage for storing the node identity of the second target service node can be obtained through the target right detection statement, and a data reading request is sent data to the storage. The node ID of the second target service node returned by the storage can be matched with the node ID of the third target service node. If the node ID of the second target service node returned by the storage is the same with the node ID of the third target service node, the third target service node is determined to have the data update right. When the third target service node has the data update right, the third target service node can update the virtual-asset associated data. Specifically, an update data identity of the update data is obtained. A data identity set of the virtual-asset associated data is obtained, the data identity set is compared with the update data identity, and a target data identity matching the update data identity is obtained from the data identity set. Associated data corresponding to the target data identity is obtained from the virtual-asset associated data, and the associated data corresponding to the target data identity is replaced with the update data.

It should be understood that after the third target service node successfully updates the virtual-asset associated data, an update record of the third target service node for the virtual-asset associated data may be stored in the block chain. Specifically, a data update record for the third target service node and the virtual-asset associated data is generated according to the third target service node, the update data, and the associated data corresponding to the target data identity. A second block is generated according to the data update record, and the second block is added to the block chain, where the block chain is a block chain to which the target service smart contract belongs.

Optionally, it can be understandable that after the block-chain node sends the real-right transfer request for the navigation equipment, the applied virtual-asset value, and the virtual-asset associated data of the navigation equipment to the set of second service nodes, Each service node in the set of second service nodes can determine the virtual-asset value of the navigation equipment (that is, an evaluation value obtained by evaluating the value of the navigation equipment) based on the virtual-asset associated data. When the virtual-asset value is greater than or equal to the applied virtual-asset value, the second service node may return the real-right transfer confirmation message to the block-chain node (that is, the second service node agrees to perform the real-right transfer). In this disclosure, in order to improve the efficiency and accuracy in evaluating the virtual-asset value of the navigation equipment by the second service node, a virtual-asset evaluation reference value for the navigation equipment can be generated based on the virtual-asset associated data of the navigation equipment. For example, when the navigation equipment is an engine, the virtual-asset evaluation reference value may include a fast maintenance value, a status discount (On Watch Limits Discount), a navigation added value (First Run Credit), a maintenance remaining time length (Estimated Green Time), an incident discount, a virtual-asset discount, a maintenance adjusted base value (MABV), and a contract virtual-asset value. The fast maintenance value is the Quick Engine Change Value of an engine. The status discount is related to the maximum allowable time between maintenance observations of the engine (On Watch Limits). It should be understood that the engine has a time range for observing a state thereof to determine whether the engine needs maintenance. The time range can be defined subjectively, for example, two months, that is, two months is the On Watch Limits. That is to say, the engine needs to be observed every two months to detect whether the engine needs maintenance. The navigation added value can refer to an added value when the engine is in the first navigation. The maintenance remaining time length can refer to a remaining time length before for the next maintenance. The incident discount can refer to a loss rate after an engine accident (for example, a fire accident, a water flood accident, etc.). The virtual-asset discount can refer to a virtual-asset discount (Missing Back to Birth Certificates Discount) when the engine's maintenance certificate data and navigation right certification data (quasi-flying certification data or airworthiness certification) are lost. The MABV can refer to a baseline value when the engine is in a state that has not been used after performance restoration-and-maintenance. The contract virtual-asset value may refer to the Lease Encumbered Engine Value (LEV) of the engine. An evaluation execution function in a related smart contract can be called, and the virtual-asset evaluation reference value of the engine can be generated according to the evaluation execution function and the virtual-asset associated data of the engine (which can include navigation data of the engine, virtual-asset discount data, historical maintenance data of the engine, and lease data of the engine). For example, when the navigation equipment is an airplane, the virtual-asset evaluation reference value may include estimated green time of the airplane, an incident discount of the airplane, a virtual-asset discount of the airplane, a MABV of the airplane, and a contract virtual-asset value of the airplane. An evaluation execution function in a related smart contract can be called, and the virtual-asset evaluation reference value of the airplane can be generated according to the evaluation execution function and the virtual-asset associated data of the airplane (which can include navigation data of the airplane, virtual-asset discount data, historical maintenance data of the airplane, and lease data of the airplane).

Further, the block-chain node can send the virtual-asset evaluation reference value of the navigation equipment together with the real-right transfer request to the set of second service nodes, and the set of second service nodes can quickly and accurately calculate the virtual-asset value of the navigation equipment based on the virtual-asset evaluation reference value.

In implementations of the disclosure, the virtual-asset associated data carried in the real-right transfer request for the navigation equipment can be stored in the block chain. Because the block chain is immutable or unforgeable, the authenticity of the virtual-asset associated data can be well ensured through the block chain. In addition, with this disclosure, a data access right (for example, data access right and data update right) can be assigned to a service node matching the real-right transfer request by generating a right detection function statement and a right detection function name. Only a service node with the data access right can access the virtual-asset associated data, which can further enhance the security and the opacity of the virtual-asset associated data, thereby making real-right transfer service based on the virtual-asset associated data more secure. It can be seen that by means of the present disclosure, the security of service data (for example, the virtual-asset associated data) can be improved through the block chain, thereby improving the security of the real-right transfer service of an item.

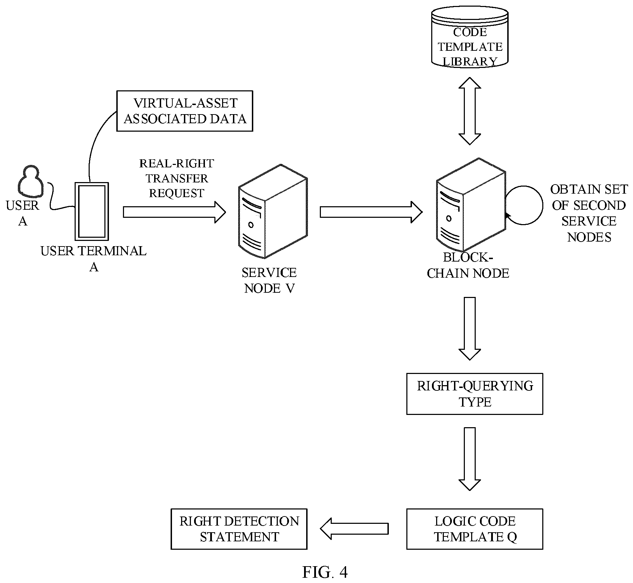

For ease of understanding, please refer to FIG. 4 together, which is a schematic diagram of a scenario for creating a right detection statement provided in implementations of the disclosure. User terminal A illustrated in FIG. 4 can be any user terminal in the user terminal cluster 10 in implementations corresponding to FIG. 1, and for example, this user terminal may be user terminal 10a. Service node V illustrated in FIG. 4 may be any light node in the light node cluster 100 in implementations corresponding to FIG. 1, and for example, this light node may be light node 100a. Block-chain node illustrated in FIG. 4 may be any core node in the core node cluster 1000 in implementations corresponding to FIG. 1, and for example, this core node may be core node 1000b.

As illustrated in FIG. 4, user a can be a user with the ownership of the navigation equipment, and user a can initiate a real-right transfer request for the navigation equipment (a mortgage-right transfer request) through user terminal A, in order to obtain virtual-asset data corresponding to applied the virtual-asset data from a virtual-asset provider. User a can input the virtual-asset associated data of the navigation equipment through user terminal A (for example, navigation data, virtual-asset discount data, historical maintenance data, lease data, delivery documents, etc.). The applied virtual-asset value may refer to the virtual-asset value that user a expects to apply for through the real-right transfer request, and user terminal A may send the real-right transfer request and the virtual-asset associated data to service node V, and service node V can send the virtual-asset associated data and the real-right transfer request to the block-chain node. Then, the block-chain node obtains the set of service nodes corresponding to the virtual-asset provider (the set of second service nodes as illustrated in FIG. 4). Further, the block-chain node needs to send the real-right transfer request to the set of second service nodes, and assigns an access right for the virtual-asset associated data to the set of second service nodes, so that the set of second service nodes confirms whether to agree to provide the virtual-asset data corresponding to the applied virtual-asset value to user a based on the virtual-asset associated data. The data access right can be assigned to the set of second service nodes as follows. The block-chain node can determine a type of a contract to be created for the set of second service nodes as the right-querying type, and a logical code template corresponding to the right-querying type obtained from a code template library is logical code template Q. Subsequently, the block-chain node can fuse a node identity of each service node in the set of second service nodes and a data identity set of the virtual-asset associated data (one data identity may correspond to one or more data in the virtual-asset associated data) with logic code template Q to obtain the right detection statement corresponding to the set of second service nodes. The right detection statement can be used to detect the data access right of the service node, and only the set of second service nodes has the data access right for the virtual-asset associated data.

It should be understood that when a virtual-asset provider agrees to transfer the virtual-asset data corresponding to the applied virtual-asset value to user a, the virtual-asset provider can send a real-right transfer confirmation message through a corresponding target service node (a service node in the set of second service nodes) to the block-chain node, and transfers the virtual-asset data corresponding to the applied virtual-asset value to the account address of user a based on the account address of user a returned by the block-chain node. Then, user a can returns, through user terminal A and service node V, the asset reception confirmation message of the virtual-asset data to the block-chain node. At this time, the block-chain node can transfer the subsidiary right of the navigation equipment (a mortgage right) from user a to the target service node (that is, the virtual-asset provider). At this time, the block-chain node can also transfer the ownership of the virtual-asset data of the navigation equipment to the target service node, that is, the data update right is assigned to the target service node, and only the target service node (that is, the virtual-asset provider) that owns the virtual-asset data can modify and update the virtual-asset associated data. Then the block-chain node can determine that the type of the contract to be created of the target service node is the right-querying type. According to the right-querying type, a logic code template (e.g., logic code template E) corresponding to the right-querying type can be obtained from the code template library. Subsequently, the block-chain node may fuse the node identity of the target service node and the data identity set of the virtual-asset associated data with logical code template E to obtain the target right detection statement corresponding to the set of second service nodes. The target right detection statement can be used to detect the data update right of the service node, and only the target service node has the data update right for the virtual-asset associated data.

It should be understood, in this disclosure stable currencies with stable and circulation characteristics can be collectively referred to as virtual asset. For example, universal currencies with price fluctuation ranges such as U.S. dollars may be referred to as virtual asset. In this disclosure, game virtual currencies can be also collectively referred to as virtual assets. For example, virtual currencies such as game gold coins, game experience points, game points, and game diamonds in a game scene can be referred to as virtual assets.

It should be understood that, the navigation equipment in this disclosure may be game equipment or game props in the game scene. In the game scene, a player can initiate a real-right transfer request for the navigation equipment such as game equipment or game props, and upload the virtual-asset associated data of the navigation equipment. The virtual-asset associated data can refer to navigation data of the navigation equipment in a virtual navigation in a game, virtual-asset discount data in the game (for example, loss rate after being attacked), historical maintenance data maintained in the game, and lease data in the game, etc. The block-chain node can send the real-right transfer request to the virtual-asset provider, where the virtual-asset provider can refer to a user who can provide game coins, game diamonds, game experience points, or game points. The virtual-asset provider can be assigned with relevant right (for example, the data access right, the data update right, etc.) for the virtual-asset associated data by creating the right detection statement and the right detection function name.

In implementations of the disclosure, virtual-asset associated data carried in a real-right transfer request for navigation equipment can be stored in a block chain. Because the block chain is immutable or unforgeable, the authenticity of the virtual-asset associated data can be well ensured through the block chain. In addition, with this disclosure, a data access right can be assigned to a service node matching the real-right transfer request by generating a right detection function statement and a right detection function name. Only a service node with the data access right can access the virtual-asset associated data, which can further enhance the security and the opacity of the virtual-asset associated data, thereby making real-right transfer service based on the virtual-asset associated data more secure. It can be seen that by means of the present disclosure, the security of service data (for example, virtual-asset associated data) can be improved through the block chain, thereby improving the security of the real-right transfer service of an item.

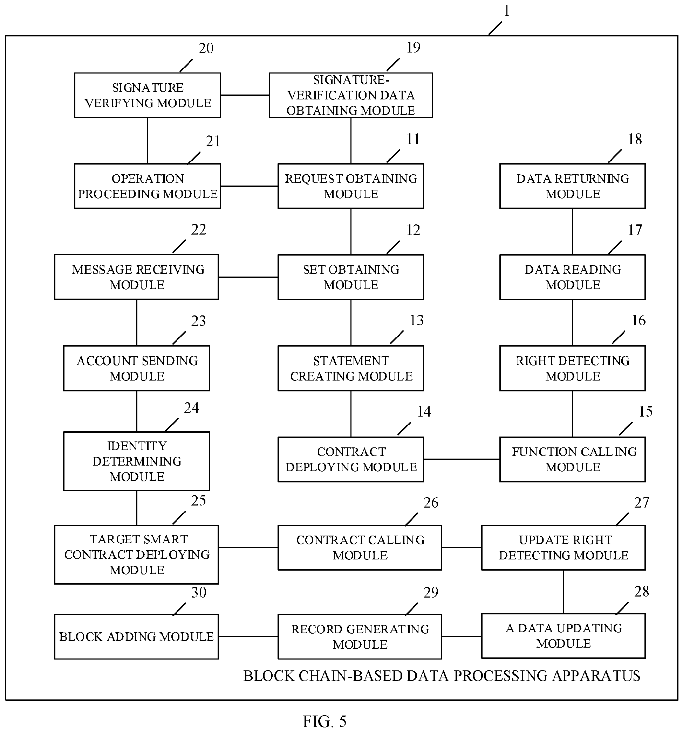

Further, reference can be made to FIG. 5, which is a schematic structural diagram illustrating a block chain-based data processing apparatus provided in implementations of the disclosure. The block chain-based data processing apparatus may be a computer program (including program codes) executed in a computer device, for example, the block chain-based data processing apparatus is an application. The block chain-based data processing apparatus can be configured to perform the method provided in implementations of the present disclosure. This smart contract-based data processing apparatus 1 may include a request obtaining module 11, a set obtaining module 12, a statement creating module 13, a contract deploying module 14, a function calling module 15, a right detecting module 16, a data reading module 17, and a data returning module 18.

The request obtaining module 11 is configured to obtain a real-right transfer request sent by a first service node, where the real-right transfer request carries virtual-asset associated data of navigation equipment and is used to request to transfer a subsidiary right of the navigation equipment, where a user who has ownership of the navigation equipment has a usage right of the navigation equipment after the subsidiary right is transferred, and the virtual-asset associated data is created by the user who has the ownership of the navigation equipment according to a data creation right.

The set obtaining module 12 is configured to trigger a smart contract according to the real-right transfer request and obtain through the smart contract a set of second service nodes matching the real-right transfer request.

The statement creating module 13 is configured to create a right detection function name and a right detection statement according to a node identity of each service node in the set of second service nodes and a data access right for the virtual-asset associated data.

The contract deploying module 14 is configured to deploy the right detection function name and the right detection statement into the smart contract to obtain a service smart contract.

The function calling module 15 is configured to call the right detection function name in the service smart contract according to a data access request for the virtual-asset associated data from a first target service node upon obtaining the data access request.

The right detecting module 16 is configured to detect data access right of the first target service node through the right detection statement corresponding to the right detection function name.

The data reading module 17 is configured to determine that the first target service node belongs to the set of second service nodes upon detecting that the first target service node has the data access right for the virtual-asset associated data, and read the virtual-asset associated data.

The data returning module 18 is configured to return the read virtual-asset associated data to the first target service node.

Reference of implementations of the request obtaining module 11, the set obtaining module 12, the statement creating module 13, the contract deploying module 14, the function calling module 15, the right detecting module 16, the data reading module 17, and the data returning module 18 can be made to operations at 101 to 105 in implementations corresponding to FIG. 2, which will not be repeated herein.

In an implementation, the virtual-asset associated data further includes a digital signature, the digital signature is obtained by signing the virtual-asset associated data according to a private key of the first service node, and the apparatus further includes a signature-verification data obtaining module 19, a signature verifying module 20, and an operation proceeding module 21.

The signature-verification data obtaining module 19 is configured to obtain a public key of the first service node, the virtual-asset associated data, and the digital signature.

The signature verifying module 20 configured to verify the digital signature of the virtual-asset associated data according to the public key.

The operation proceeding module 21 is configured to generate a first block according to the virtual-asset associated data when the digital signature is a legal signature, and proceed to triggering the smart contract according to the real-right transfer request, and obtaining through the smart contract the set of second service nodes matching the real-right transfer request when the first block is successfully added to a block chain, where the block chain is a block chain to which the smart contract belongs.

Reference of implementations of the signature-verification data obtaining module 19, the signature verifying module 20, and the operation proceeding module 21 can be made to operations at 102 in implementations corresponding to FIG. 2, which will not be repeated herein.

In an implementation, the statement creating module 13 is further specifically configured to determine, according to the real-right transfer request, that a type of a contract to be created corresponding to the set of second service nodes is a right-querying contract type; obtain a target logic code template that matches the right-querying contract type from a code template library, where the code template library includes logic code templates corresponding to M contract types, the M contract types include the right-querying contract type, M being a positive integer; obtain the node identity of each service node in the set of second service nodes, use the node identity of each service node in the set of second service nodes and a data identity set of the virtual-asset associated data as a variable, and fuse the variable and the target logic code template to obtain a right-querying logic code corresponding to virtual-asset data; determine the right-querying logic code as the right detection statement, and configure a corresponding right detection function name for the right detection statement.

In an implementation, the right detecting module 16 is further specifically configured to query a data storage associated with the virtual-asset associated data through the right detection statement, where the data storage is used to store the node identity of each service node in the set of second service nodes; send a data reading request to the data storage, and receive the node identity of each service node in the set of second service nodes returned by the data storage in response to the data reading request; compare a service node identity of the first target service node with the node identity of each service node in the set of second service nodes, and broadcast a matching result in a consensus network, so that a consensus node in the consensus network votes on the matching result; detect the data access right of the first target service node according to the matching result and a voting result of the consensus node.

In an implementation, the right detecting module 16 is further specifically configured to determine that the first target service node has the data access right for the virtual-asset associated data when the matching result is a successful matching result and the voting result is a vote passed; determine that the first target service node does not have the data access right for the virtual-asset associated data when the matching result is a successful matching result and the voting result is a voting not passed; determine that the first target service node does not have the data access right for the virtual-asset associated data when the matching result is a failed matching result and the voting result is a vote passed; determine that the first target service node has the data access right for the virtual-asset associated data when the matching result is a failed matching result and the voting result is that a vote not passed.

In an implementation, the first target service node stores block header information of each block in the block chain, and the block chain is a block chain to which the service smart contract belongs. The data returning module 18 is further specifically configured to obtain a target block to which the virtual-asset associated data belongs, obtain a corresponding hash value and a Merkel tree path in the target block, where the hash value includes a first hash value of the virtual-asset associated data and a second hash value of transaction data stored in the target block, where the transaction data is different from the virtual-asset associated data; return the hash value and the Merkel tree path to the first target service node, so that the first target service node generates a first Merkel tree root according to the hash value and the Merkel tree path, compares the first Merkel tree root with a second Merkel tree root in a block header of the target block, and stores the virtual-asset associated data when the matching result is that the first Merkel tree root is the same with the second Merkel tree root.

In an implementation, the real-right transfer request further includes an applied virtual-asset value. As illustrated in FIG. 5, the apparatus further includes a message receiving module 22, an account sending module 23, an identity determining module 24, and a target smart contract deploying module 25.

The message receiving module 22 is configured to send the real-right transfer request to the set of second service nodes and receive a real-right transfer confirmation message sent by a second target service node, where the set of second service nodes includes the second target service node.

The account sending module 23 is configured to obtain an account address of the user with the ownership of the navigation equipment according to the real-right transfer confirmation message and send the account address to the second target service node, so that the second target service node transfers virtual-asset data corresponding to the applied virtual-asset value to the account address.

The identity determining module 24 is configured to receive an asset reception confirmation message for the virtual-asset data sent by the first service node and obtain a target node identity of the second target service node according to the asset reception confirmation message.

The target smart contract deploying module 25 is configured to create a target right detection function name and a target right detection statement according to the target node identity and a data update right for the virtual-asset associated data, and deploy the target right detection function name and the target right detection statement into the service smart contract to obtain a target service smart contract.

Reference of implementations of the message receiving module 22, the account sending module 23, the identity determining module 24, and the target smart contract deploying module 25 can be made to operations at 104 in implementations corresponding to FIG. 2, which will not be repeated herein.

As illustrated in FIG. 5, the apparatus further includes a contract calling module 26, an update right detecting module 27, and a data updating module 28.

The contract calling module 26 is configured to call the target right detection function name in the target service smart contract according to a data update request for the virtual-asset associated data from a third target service node upon obtaining the data update request, where the data update request carries update data, and the update data is used to update the virtual-asset associated data.

The update right detecting module 27 is configured to detect a data update right of the third target service node through the target right detection statement corresponding to the target right detection function name.

The data updating module 28 is configured to determine that the third target service node is the same with the second target service node upon detecting that the third target service node has the data update right for the virtual-asset associated data, and updating the virtual-asset associated data according to the update data.

Reference of implementations of the contract calling module 26, the update right detecting module 27, and the data updating module 28 can be made to operations at 104 in implementations corresponding to FIG. 2, which will not be repeated herein.

In an implementation, the data updating module 28 is further specifically configured to obtain an update data identity of the update data; obtain a data identity set of the virtual-asset associated data, compare the data identity set with the update data identity, and obtain a target data identity matching the update data identity from the data identity set; obtain associated data corresponding to the target data identity from the virtual-asset associated data, and replace the associated data corresponding to the target data identity with the update data.

As illustrated in FIG. 5, the apparatus further includes a record generating module 29 and a block adding module 30.

The record generating module 29 is configured to generate a data update record for the third target service node and the virtual-asset associated data according to the third target service node, the update data, and the associated data corresponding to the target data identity.

The block adding module 30 is configured to generating a second block according to the data update record, and adding the second block to the block chain, where the block chain is a block chain to which the target service smart contract belongs.

Reference of implementations of the record generating module 29 and the block adding module 30 can be made to operations at 104 in implementations corresponding to FIG. 2, which will not be repeated herein.

In implementations of the disclosure, virtual-asset associated data carried in a real-right transfer request for navigation equipment can be stored in a block chain. Because the block chain is immutable or unforgeable, the authenticity of the virtual-asset associated data can be well ensured through the block chain. In addition, with this disclosure, a data access right can be assigned to a service node matching the real-right transfer request by generating a right detection function statement and a right detection function name. Only a service node with the data access right can access the virtual-asset associated data, which can further enhance the security and the opacity of the virtual-asset associated data, thereby making real-right transfer service based on the virtual-asset associated data more secure. It can be seen that by means of the present disclosure, the security of service data (for example, virtual-asset associated data) can be improved through the block chain, thereby improving the security of the real-right transfer service of an item.

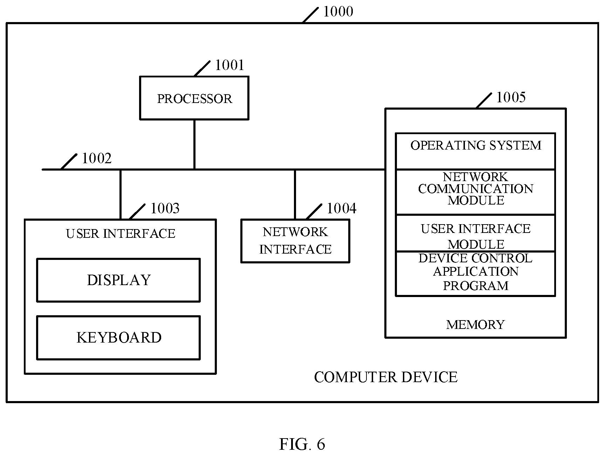

Furthermore, referring to FIG. 6, which is a schematic structural diagram illustrating a computer device provided in implementations of the disclosure. As illustrated in FIG. 6, the apparatus 1 in the implementation corresponding to FIG. 5 can be applied in the computer device 100. The computer device 100 includes a processor 1001, a network interface 1004, and a memory 1005. In addition, the computer device 100 further includes a user interface 1003 and at least one communication interface 1002. The communication interface 1002 is configured for connection and communication between these assemblies. The user interface 1003 may include a display and a keyboard. Alternatively, the user interface 1003 may also include a standard wired interface and a standard wireless interface. Alternatively, the network interface 1004 may include a standard wired interface and a standard wireless interface (such as a wireless fidelity (Wi-Fi) interface). The memory 1005 may be a random access memory (RAM) and also be a non-volatile memory, such as a magnetic disk memory. Alternatively, the memory 1005 may also be at least one storage apparatus located away from the processor 1001. As illustrated in FIG. 5, the memory 1005 serving as a computer-readable storage medium may include an operating system, a network communication module, a user interface module, and a device control application program.

As illustrated in FIG. 6, in the computer device 1000, the network interface 1004 is configured to provide a network communication function, the processor 1001 is configured to invoke the device control application program stored in the memory 1005, to implement the following.

A block chain-based data processing method is provided in an aspect of implementations of the disclosure. The method includes the following. A real-right transfer request sent by a first service node is obtained, where the real-right transfer request carries virtual-asset associated data of navigation equipment and is used to request to transfer a subsidiary right of the navigation equipment, where a user who has ownership of the navigation equipment has a usage right of the navigation equipment after the subsidiary right is transferred, and the virtual-asset associated data is created by the user who has the ownership of the navigation equipment according to a data creation right. A smart contract is triggered according to the real-right transfer request and a set of second service nodes matching the real-right transfer request is obtained through the smart contract. A right detection function name and a right detection statement are created according to a node identity of each service node in the set of second service nodes and a data access right for the virtual-asset associated data, and the right detection function name and the right detection statement are deployed into the smart contract to obtain a service smart contract. The right detection function name in the service smart contract is called according to a data access request for the virtual-asset associated data from a first target service node upon obtaining the data access request, and a data access right of the first target service node is detected through the right detection statement corresponding to the right detection function name. The first target service node is determined to belong to the set of second service nodes upon detecting that the first target service node has the data access right for the virtual-asset associated data, the virtual-asset associated data is read, and the read virtual-asset associated data is returned to the first target service node.

It can be understood that, the computer device 1000 described in implementations of the disclosure can execute description of the block chain-based data processing method in the implementation corresponding to FIG. 2, and also execute description of the block chain-based data processing apparatus in the implementation corresponding to FIG. 5, which will not be repeated herein. In addition, the advantageous effect is described in a same method, which will not be repeated herein.

In addition, it needs to be noted that, a computer-readable storage medium is provided in implementations of the disclosure. The computer-readable storage medium is configured to store the computer programs executed by the computer device 1000 used for data processing described above. The computer programs include program instructions which, when executed by the processor, can execute the block chain-based data processing method in the implementation corresponding to FIG. 2, so which will not be repeated herein. In addition, the advantageous effect is described in a same method, which will not be repeated herein. As for technical details undisclosed in implementations related to the computer-readable storage medium in the disclosure, reference can be made to descriptions in the method implementations of the disclosure.

The computer-readable storage medium may be an internal storage unit of the block chain-based data processing apparatus provided in any of the foregoing implementations or the above computer device, such as a hard disk or a memory of the computer device. The computer-readable storage medium may also be an external storage device of the computer device, such as a plug-in hard disk, a smart media card (SMC), a secure digital (SD) card, a flash card, and the like that are provided on the computer device. In addition, the computer-readable storage medium may also include both the internal storage unit of the computer device and the external storage device of the computer device. The computer-readable storage medium is configured to store computer programs and other programs and data required by the computer device. The computer-readable storage medium can be further configured to temporarily store data that has been or is to be outputted.

A computer program product or computer programs are provided in an aspect of the disclosure. The computer program product or computer programs include computer instructions stored in a computer-readable storage medium. A processor of a computer device is configured to read the computer instructions from the computer-readable storage medium. The computer instructions, when executed by the processor, cause the processor to perform the method provided in an aspect in implementations of the disclosure.

The terms "first", "second", and the like used in the specification, the claims, and the accompany drawings in implementations of the disclosure are used to distinguish different objects rather than describe a particular order. The terms "include" and variations thereof are intended to cover non-exclusive inclusion. For example, a process, method, apparatus, product, or device including a series of steps or units is not limited to the listed steps or modules, on the contrary, it can optionally include other steps or modules that are not listed; alternatively, other steps or units inherent to the process, method, apparatus, product, or device can be included either.

Those of ordinary skill in the art will appreciate that units and algorithmic operations of various examples described in connection with implementations herein can be implemented by electronic hardware, computer software, or by a combination of computer software and electronic hardware. In order to describe interchangeability between hardware and software, the contents and steps of each implementation have been generally described according to functions in the above description. Whether these functions are performed by means of hardware or software depends on the disclosure and the design constraints of the associated technical solution. Those skilled in the art may use different methods with regard to each particular disclosure to implement the described functionality, but such methods should not be regarded as lying beyond the scope of the disclosure.

The method and related apparatus provided in implementations of the disclosure is described herein with reference to method flowcharts and/or structural diagrams provided in implementations of the disclosure. Specifically, each flow and/or block in the method flowchart and/or structural diagram, and a combination of flow and/or block in the flowchart and/or block diagram can be implemented by computer program instructions. These computer program instructions may be provided to a general purpose computer, a special purpose computer, an embedded processor or a processor of other programmable data processing apparatuses to form a machine, such that devices for implementing functions specified by one or more flows in the flowchart and/or one or more blocks in the structural diagram may be generated by executing the instructions with the processor of the computer or other programmable data processing apparatuses. The computer program instructions may also be stored in a computer-readable memory that can direct the computer or other programmable data processing apparatuses to operate in a given manner, so that the instructions stored in the computer-readable memory produce a manufactured article including an instruction device, and the instruction device implements the functions specified by one or more flows in the flowchart and/or one or more blocks in the structural diagram. The computer program instructions may also be loaded onto the computer or other programmable data processing apparatuses, such that a series of process steps may be executed on the computer or other programmable apparatuses to produce processing implemented by the computer, so that the instructions executed on the computer or other programmable apparatuses provide steps for implementing the functions specified by one or more flows in the flowchart and/or one or more blocks in the structural diagram.

The foregoing implementations are merely some implementations of the disclosure. The protection scope of the disclosure is not limited thereto. Those skilled in the art can easily think of variations or substitutions within the technical scope disclosed in the disclosure, and these variations or substitutions shall be fall in the scope of protection of the disclosure. Therefore, the protection scope of the disclosure shall be subject to the protection scope of the claims.

## Claims

1. A block chain-based data processing method, comprising:
obtaining (S101) a real-right transfer request sent by a first service node, wherein the real-right transfer request carries virtual-asset associated data of navigation equipment and is used to request to transfer a subsidiary right of the navigation equipment, wherein a user who has ownership of the navigation equipment has a usage right of the navigation equipment after the subsidiary right is transferred, and the virtual-asset associated data is created by the user who has the ownership of the navigation equipment according to a data creation right;
triggering (S102) a smart contract according to the real-right transfer request and obtaining through the smart contract a set of second service nodes matching the real-right transfer request;
creating (S103) a right detection function name and a right detection statement according to a node identity of each service node in the set of second service nodes and a data access right for the virtual-asset associated data, and deploying the right detection function name and the right detection statement into the smart contract to obtain a service smart contract;
calling (S104) the right detection function name in the service smart contract according to a data access request for the virtual-asset associated data from a first target service node upon obtaining the data access request, and detecting a data access right of the first target service node through the right detection statement corresponding to the right detection function name; and
determining (S105) that the first target service node belongs to the set of second service nodes upon detecting that the first target service node has the data access right for the virtual-asset associated data, reading the virtual-asset associated data, and returning the read virtual-asset associated data to the first target service node.

2. The method of claim 1, wherein the virtual-asset associated data further comprises a digital signature, the digital signature is obtained by signing the virtual-asset associated data according to a private key of the first service node, and the method further comprises:
obtaining a public key of the first service node, the virtual-asset associated data, and the digital signature;
verifying the digital signature of the virtual-asset associated data according to the public key; and
generating a first block according to the virtual-asset associated data when the digital signature is a legal signature, and proceeding to triggering the smart contract according to the real-right transfer request, and obtaining through the smart contract the set of second service nodes matching the real-right transfer request when the first block is successfully added to a block chain, wherein the block chain is a block chain to which the smart contract belongs.

3. The method of claim 1, wherein creating the right detection function name and the right detection statement according to the node identity of each service node in the set of second service nodes and the data access right for the virtual-asset associated data comprises:
determining, according to the real-right transfer request, that a type of a contract to be created corresponding to the set of second service nodes is a right-querying contract type;
obtaining a target logic code template that matches the right-querying contract type from a code template library, wherein the code template library comprises logic code templates corresponding to M contract types, the M contract types comprise the right-querying contract type, M being a positive integer;
obtaining the node identity of each service node in the set of second service nodes, using the node identity of each service node in the set of second service nodes and a data identity set of the virtual-asset associated data as a variable, and fusing the variable and the target logic code template to obtain a right-querying logic code corresponding to virtual-asset data; and
determining the right-querying logic code as the right detection statement, and configuring a corresponding right detection function name for the right detection statement.

4. The method of claim 1, wherein detecting the data access right of the first target service node through the right detection statement corresponding to the right detection function name comprises:
querying a data storage associated with the virtual-asset associated data through the right detection statement, wherein the data storage is used to store the node identity of each service node in the set of second service nodes;
sending a data reading request to the data storage, and receiving the node identity of each service node in the set of second service nodes returned by the data storage in response to the data reading request;
comparing a service node identity of the first target service node with the node identity of each service node in the set of second service nodes, and broadcasting a matching result in a consensus network, so that a consensus node in the consensus network votes on the matching result; and
detecting the data access right of the first target service node according to the matching result and a voting result of the consensus node.

5. The method of claim 4, wherein detecting the data access right of the first target service node according to the matching result and the voting result of the consensus node comprises:
determining that the first target service node has the data access right for the virtual-asset associated data when the matching result is a successful matching result and the voting result is a vote passed;
determining that the first target service node does not have the data access right for the virtual-asset associated data when the matching result is a successful matching result and the voting result is a voting not passed;
determining that the first target service node does not have the data access right for the virtual-asset associated data when the matching result is a failed matching result and the voting result is a vote passed; and
determining that the first target service node has the data access right for the virtual-asset associated data when the matching result is a failed matching result and the voting result is that a vote not passed.

6. The method of claim 1, wherein the first target service node stores block header information of each block in the block chain, and the block chain is a block chain to which the service smart contract belongs;
wherein returning the read virtual-asset associated data to the first target service node comprises:
obtaining a target block to which the virtual-asset associated data belongs, obtaining a corresponding hash value and a Merkel tree path in the target block, wherein the hash value comprises a first hash value of the virtual-asset associated data and a second hash value of transaction data stored in the target block, wherein the transaction data is different from the virtual-asset associated data; and
returning the hash value and the Merkel tree path to the first target service node, so that the first target service node generates a first Merkel tree root according to the hash value and the Merkel tree path, compares the first Merkel tree root with a second Merkel tree root in a block header of the target block, and stores the virtual-asset associated data when the matching result is that the first Merkel tree root is the same with the second Merkel tree root.

7. The method of claim 1, wherein the real-right transfer request further comprises an applied virtual-asset value; and
wherein the method further comprises:
sending the real-right transfer request to the set of second service nodes and receiving a real-right transfer confirmation message sent by a second target service node, wherein the set of second service nodes comprises the second target service node;
obtaining an account address of the user with the ownership of the navigation equipment according to the real-right transfer confirmation message and sending the account address to the second target service node, so that the second target service node transfers virtual-asset data corresponding to the applied virtual-asset value to the account address;
receiving an asset reception confirmation message for the virtual-asset data sent by the first service node and obtaining a target node identity of the second target service node according to the asset reception confirmation message; and
creating a target right detection function name and a target right detection statement according to the target node identity and a data update right for the virtual-asset associated data, and deploying the target right detection function name and the target right detection statement into the service smart contract to obtain a target service smart contract.

8. The method of claim 7, further comprising:
calling the target right detection function name in the target service smart contract according to a data update request for the virtual-asset associated data from a third target service node upon obtaining the data update request, wherein the data update request carries update data, and the update data is used to update the virtual-asset associated data;
detecting a data update right of the third target service node through the target right detection statement corresponding to the target right detection function name; and
determining that the third target service node is the same with the second target service node upon detecting that the third target service node has the data update right for the virtual-asset associated data, and updating the virtual-asset associated data according to the update data.

9. The method of claim 8, wherein updating the virtual-asset associated data according to the update data comprises:
obtaining an update data identity of the update data;
obtaining a data identity set of the virtual-asset associated data, comparing the data identity set with the update data identity, and obtaining a target data identity matching the update data identity from the data identity set; and
obtaining associated data corresponding to the target data identity from the virtual-asset associated data, and replacing the associated data corresponding to the target data identity with the update data.

10. The method of claim 9, further comprising:
generating a data update record for the third target service node and the virtual-asset associated data according to the third target service node, the update data, and the associated data corresponding to the target data identity; and
generating a second block according to the data update record, and adding the second block to the block chain, wherein the block chain is a block chain to which the target service smart contract belongs.

11. A block chain-based data processing apparatus, comprising:
a request obtaining module (11) configured to obtain a real-right transfer request sent by a first service node, wherein the real-right transfer request carries virtual-asset associated data of navigation equipment and is used to request to transfer a subsidiary right of the navigation equipment, wherein a user who has ownership of the navigation equipment has a usage right of the navigation equipment after the subsidiary right is transferred, and the virtual-asset associated data is created by the user who has the ownership of the navigation equipment according to a data creation right;
a set obtaining module (12) configured to trigger a smart contract according to the real-right transfer request and obtain through the smart contract a set of second service nodes matching the real-right transfer request;
a statement creating module (13) configured to create a right detection function name and a right detection statement according to a node identity of each service node in the set of second service nodes and a data access right for the virtual-asset associated data;
a contract deploying module (14) configured to deploy the right detection function name and the right detection statement into the smart contract to obtain a service smart contract;
a function calling module (15) configured to call the right detection function name in the service smart contract according to a data access request for the virtual-asset associated data from a first target service node upon obtaining the data access request;
a right detecting module (16) configured to detect data access right of the first target service node through the right detection statement corresponding to the right detection function name;
a data reading module (17) configured to determine that the first target service node belongs to the set of second service nodes upon detecting that the first target service node has the data access right for the virtual-asset associated data, and read the virtual-asset associated data; and
a data returning module (18) configured to return the read virtual-asset associated data to the first target service node.

12. A computer device, comprising:
a memory configured to store program codes;
a network interface configured to provide a network communication function; and
a processor coupled with the memory and the network interface and configured to invoke the program codes to perform the method of any of claims 1-10.

13. A computer-readable storage medium, configured to store computer programs, which when executed, are operable with a processor to perform the method of any of claims 1-10.

## Patentansprüche

1. Auf Blockchain-basierendes Datenverarbeitungsverfahren, umfassend:
Erhalten (S101) einer Anfrage zur Übertragung von realen Rechten, die von einem ersten Dienstknoten gesendet wurde, wobei die Anfrage zur Übertragung von realen Rechten virtuelle, mit einem Vermögenswert verbundene Daten der Navigationsausrüstung trägt und verwendet wird, um die Übertragung eines Nebenrechts der Navigationsausrüstung anzufordern, wobei ein Benutzer, der Eigentümer der Navigationsausrüstung ist, ein Nutzungsrecht an der Navigationsausrüstung hat, nachdem das Nebenrecht übertragen wurde, und die mit einem virtuellen Vermögenswert verbundenen Daten von dem Benutzer, der Eigentümer der Navigationsausrüstung ist, gemäß einem Datenerstellungsrecht erstellt werden;
Auslösen (S102) eines intelligenten Vertrags gemäß der Anfrage zur Übertragung von realen Rechten und Erhalten einer Reihe von zweiten Dienstknoten, die der Anfrage zur Übertragung von Realrechten entsprechen, durch den intelligenten Vertrag;
Erzeugen (S103) eines Funktionsnamens zur Erkennung des Zielrechts und einer Anweisung zur Erkennung des Zielrechts gemäß einer Knotenidentität jedes Dienstknotens in der Menge der zweiten Dienstknoten und eines Datenzugriffsrechts für die mit dem virtuellen Vermögenswert verbundenen Daten, und Einsetzen des Funktionsnamens zur Erkennung des Zielrechts und der Anweisung zur Erkennung des Zielrechts in den intelligenten Vertrag, um einen intelligenten Dienstvertrag zu erhalten;
Aufrufen (S104) des Funktionsnamens zur Erkennung des Zielrechts in dem intelligenten Dienstvertrag gemäß einer Datenzugriffsanforderung für die mit dem virtuellen Vermögenswert verbundenen Daten von einem ersten Zieldienstknoten nach Erhalt der Datenzugriffsanforderung und Erkennen eines Datenzugriffsrechts des ersten Zieldienstknotens durch die Anweisung zur Erkennung des Zielrechts, die dem Funktionsnamen zur Erkennung des Zielrechts entspricht; und
Bestimmen (S105), dass der erste Zieldienstknoten zu der Menge der zweiten Dienstknoten gehört, wenn festgestellt wird, dass der erste Zieldienstknoten das Datenzugriffsrecht für die mit dem virtuellen Vermögenswert verbundenen Daten hat, Lesen der mit dem virtuellen Vermögenswert verbundenen Daten und Zurückgeben der gelesenen mit dem virtuellen Vermögenswert verbundenen Daten an den ersten Zieldienstknoten.

2. Verfahren nach Anspruch 1, wobei die mit dem virtuellen Vermögenswert verbundenen Daten ferner eine digitale Signatur umfassen, die digitale Signatur durch Signieren der mit dem virtuellen Vermögenswert verbundenen Daten gemäß einem privaten Schlüssel des ersten Dienstknotens erhalten wird, und das Verfahren ferner umfasst:
Erhalten eines öffentlichen Schlüssels des ersten Dienstknotens, der mit dem virtuellen Vermögenswert verbundenen Daten und der digitalen Signatur;
Prüfen der digitalen Signatur der mit dem virtuellen Vermögenswert verbundenen Daten gemäß dem öffentlichen Schlüssel; und Erzeugen eines ersten Blocks gemäß den mit dem virtuellen Vermögenswert verbundenen Daten, wenn die digitale Anfrage zur Übertragung von realen Rechten gestellt wird, und Erhalten der Menge der zweiten Dienstknoten, die mit der Anfrage zur Übertragung von realen Rechten übereinstimmen, durch den intelligenten Vertrag, wenn der erste Block erfolgreich zu einer Blockchain hinzugefügt wird, wobei die Blockchain eine Blockchain ist, zu der der intelligente Vertrag gehört.

3. Verfahren nach Anspruch 1, wobei das Erzeugen des Funktionsnamens zur Erkennung des Zielrechts und der Anweisung zur Erkennung des Zielrechts gemäß der Knotenidentität jedes Dienstknotens in der Menge der zweiten Dienstknoten und des Datenzugriffsrechts für die mit dem virtuellen Vermögenswert verbundenen Daten umfasst:
Bestimmen, entsprechend der Anfrage zur Übertragung von realen Rechten, dass ein Typ eines zu erstellenden Vertrags, der der Menge der zweiten Dienstknoten entspricht, ein Vertragstyp ist, der Rechte abfragt;
Erhalten einer Ziellogikcodevorlage, die mit dem rechtsabfragenden Vertragstyp übereinstimmt, aus einer Codevorlagenbibliothek, wobei die Codevorlagenbibliothek Logikcodevorlagen umfasst, die M-Vertragstypen entsprechen, wobei die M-Vertragstypen den rechtsabfragenden Vertragstyp umfassen und M eine positive ganze Zahl ist;
Erhalten der Knotenidentität jedes Dienstknotens in der Menge der zweiten Dienstknoten, Verwenden der Knotenidentität jedes Dienstknotens in der Menge der zweiten Dienstknoten und eines Datenidentitätssatzes der mit dem virtuellen Vermögenswert verbundenen Daten als eine Variable und Verschmelzen der Variable und der Ziellogikcodeschablone, um einen rechtsabfragenden Logikcode zu erhalten, der den Daten des virtuellen Vermögenswertes entspricht; und
Bestimmen des Logikcodes für die Abfrage des Rechts als Anweisung zur Erkennung des Zielrechts und Konfigurieren eines entsprechenden Funktionsnamens zur Erkennung des Rechts.

4. Verfahren nach Anspruch 1, wobei das Erkennen des Datenzugriffsrechts des ersten Zieldienstknotens durch die Anweisung zur Erkennung des Zielrechts, die dem Funktionsnamen zur Erkennung des Zielrechts entspricht, umfasst:
Abfragen eines Datenspeichers, der mit den mit dem virtuellen Vermögenswert verbundenen Daten verbunden ist, durch die Anweisung zur Erkennung des Zielrechts, wobei der Datenspeicher verwendet wird, um die Knotenidentität jedes Dienstknotens in der Menge der zweiten Dienstknoten zu speichern;
Senden einer Datenleseanforderung an den Datenspeicher und Empfangen der Knotenidentität jedes Dienstknotens in der Menge der zweiten Dienstknoten, die von dem Datenspeicher als Antwort auf die Datenleseanforderung zurückgegeben wird;
Vergleichen einer Dienstknotenidentität des ersten Zieldienstknotens mit der Knotenidentität jedes Dienstknotens in der Menge der zweiten Dienstknoten und Rundsenden eines Übereinstimmungsergebnisses in einem Konsensnetzwerk, sodass ein Konsensknoten in dem Konsensnetzwerk über das Übereinstimmungsergebnis abgestimmt wird; und
Erkennen des Datenzugriffsrechts des ersten Zieldienstknotens gemäß dem Übereinstimmungsergebnis und einem Abstimmungsergebnis des Konsensknotens.

5. Verfahren nach Anspruch 4, wobei das Erkennen des Datenzugriffsrechts des ersten Zieldienstknotens gemäß dem Übereinstimmungsergebnis und dem Abstimmungsergebnis des Konsensknotens Folgendes umfasst:
Feststellen, dass der erste Zieldienstknoten das Datenzugriffsrecht für die mit dem virtuellen Vermögenswert verbundenen Daten hat, wenn das Übereinstimmungsergebnis ein erfolgreiches Übereinstimmungsergebnis ist und das Abstimmungsergebnis eine angenommene Abstimmung ist;
Feststellen, dass der erste Zieldienstknoten nicht über das Datenzugriffsrecht für die mit dem virtuellen Vermögenswert verbundenen Daten verfügt, wenn das Übereinstimmungsergebnis ein erfolgreiches Übereinstimmungsergebnis ist und das Abstimmungsergebnis ein nicht angenommenes Abstimmungsergebnis ist;
Feststellen, dass der erste Zieldienstknoten das Datenzugriffsrecht für die mit dem virtuellen Vermögenswert verbundenen Daten nicht hat, wenn das Übereinstimmungsergebnis ein fehlgeschlagenes Übereinstimmungsergebnis ist und das Abstimmungsergebnis eine angenommene Abstimmung ist; und Feststellen, dass der erste Zieldienstknoten das Datenzugriffsrecht für die mit dem virtuellen Vermögenswert verbundenen Daten hat, wenn das Übereinstimmungsergebnis ein fehlgeschlagenes Übereinstimmungsergebnis ist und das Abstimmungsergebnis eine nicht angenommene Abstimmung ist.

6. Verfahren nach Anspruch 1, wobei der erste Zieldienstknoten die Block-Header-Informationen jedes Blocks in der Blockchain speichert und die Blockchain eine Blockchain ist, zu der der intelligente Dienstvertrag gehört;
wobei die Rückgabe der gelesenen, mit dem virtuellen Vermögenswert verbundenen Daten an den ersten Zieldienstknoten das Folgende umfasst:
Erhalten eines Zielblocks, zu dem die mit dem virtuellen Vermögenswert verbundenen Daten gehören, Erhalten eines entsprechenden Hash-Wertes und eines Merkel-Baumpfades in dem Zielblock, wobei der Hash-Wert einen ersten Hash-Wert der mit dem virtuellen Vermögenswert verbundenen Daten und einen zweiten Hash-Wert von in dem Zielblock gespeicherten Transaktionsdaten umfasst, wobei die Transaktionsdaten von den mit dem virtuellen Vermögenswert verbundenen Daten verschieden sind; und
den Hash-Wert und den Merkel-Baumpfad an den ersten Zieldienstknoten zurückgibt, sodass der erste Zieldienstknoten eine erste Merkel-Baumwurzel gemäß dem Hash-Wert und dem Merkel-Baumpfad erstellt, die erste Merkel-Baumwurzel mit einer zweiten Merkel-Baumwurzel in einem Block-Header des Zielblocks vergleicht und die mit dem virtuellen Vermögenswert verbundenen Daten speichert, wenn das Ergebnis des Vergleichs ist, dass die erste Merkel-Baumwurzel mit der zweiten Merkel-Baumwurzel identisch ist.

7. Verfahren nach Anspruch 1, wobei der Anfrage zur Übertragung von realen Rechten ferner einen angewandten Wert für virtuelle Vermögenswerte umfasst; und
wobei das Verfahren ferner Folgendes umfasst:
Senden der Anfrage zur Übertragung von realen Rechten an die Menge der zweiten Dienstknoten und Empfangen einer Bestätigungsnachricht zur Übertragung von realen Rechten, die von einem zweiten Zieldienstknoten gesendet wird, wobei die Menge der zweiten Dienstknoten den zweiten Zieldienstknoten umfasst;
Erhalten einer Kontoadresse des Benutzers, der Eigentümer des Navigationsgeräts ist, gemäß der Bestätigungsnachricht zur Übertragung von realen Rechten und Senden der Kontoadresse an den zweiten Zieldienstknoten, sodass der zweite Zieldienstknoten virtuelle Vermögensdaten, die dem angewandten virtuellen Vermögenswert entsprechen, an die Kontoadresse überträgt;
Empfangen einer Bestätigungsnachricht für den Empfang eines Vermögenswerts für die von dem ersten Dienstknoten gesendeten Daten eines virtuellen Vermögenswerts und Erhalten einer Zielknotenidentität des zweiten Zieldienstknotens gemäß der Bestätigungsnachricht für den Empfang eines Vermögenswerts; und
Erstellen eines Funktionsnamens zur Erkennung des Zielrechts und einer Anweisung zur Erkennung des Zielrechts entsprechend der Identität des Zielknotens und eines Datenaktualisierungsrechts für die mit dem virtuellen Vermögenswert verbundenen Daten, und Einsetzen des Funktionsnamens zur Erkennung des Zielrechts und der Anweisung zur Erkennung des Zielrechts in den intelligenten Dienstvertrag, um einen intelligenten Dienstvertrag zu erhalten.

8. Verfahren nach Anspruch 7, ferner umfassend:
Aufrufen des Funktionsnamens zur Erkennung des Zielrechts in dem intelligenten Vertrag für den Zieldienst gemäß einer Datenaktualisierungsanforderung für die mit dem virtuellen Vermögenswert verbundenen Daten von einem dritten Zieldienstknoten nach Erhalt der Datenaktualisierungsanforderung, wobei die Datenaktualisierungsanforderung Aktualisierungsdaten enthält und die Aktualisierungsdaten verwendet werden, um die mit dem virtuellen Vermögenswert verbundenen Daten zu aktualisieren;
Erkennen eines Datenaktualisierungsrechts des dritten Zieldienstknotens durch die Anweisung zur Erkennung des Zielrechts, die dem Funktionsnamen zur Erkennung des Zielrechts entspricht; und
Feststellen, dass der dritte Zieldienstknoten mit dem zweiten Zieldienstknoten identisch ist, wenn festgestellt wird, dass der dritte Zieldienstknoten das Datenaktualisierungsrecht für die mit dem virtuellen Vermögenswert verbundenen Daten hat, und Aktualisieren der mit dem virtuellen Vermögenswert verbundenen Daten gemäß den Aktualisierungsdaten.

9. Verfahren nach Anspruch 8, wobei die Aktualisierung der mit dem virtuellen Vermögenswert verbundenen Daten gemäß den Aktualisierungsdaten Folgendes umfasst:
Erhalten einer Aktualisierungsdatenidentität der Aktualisierungsdaten;
Erhalten eines Datenidentitätssatzes der mit dem virtuellen Vermögenswert verbundenen Daten, Vergleichen des Datenidentitätssatzes mit der Aktualisierungsdatenidentität und Erhalten einer Zieldatenidentität, die mit der Aktualisierungsdatenidentität übereinstimmt, aus dem Datenidentitätssatz; und
Erhalten von zugehörigen Daten, die der Zieldatenidentität entsprechen, aus den zugehörigen Daten des virtuellen Vermögenswerts, und Ersetzen der zugehörigen Daten, die der Zieldatenidentität entsprechen, durch die Aktualisierungsdaten.

10. Verfahren nach Anspruch 9, ferner umfassend:
Erzeugen eines Datenaktualisierungsdatensatzes für den dritten Zieldienstknoten und die mit dem virtuellen Vermögenswert verbundenen Daten gemäß dem dritten Zieldienstknoten, den Aktualisierungsdaten und den mit der Zieldatenidentität verbundenen Daten; und
Erzeugen eines zweiten Blocks gemäß dem Datenaktualisierungsdatensatz und Hinzufügen des zweiten Blocks zu der Blockchain, wobei die Blockchain eine Blockchain ist, zu der der intelligente Zieldienstvertrag gehört.

11. Blockchain-basierte Datenverarbeitungsvorrichtung, umfassend:
ein Anforderungserfassungsmodul (11), das so konfiguriert ist, dass es eine von einem ersten Dienstknoten gesendete Anforderung zur Übertragung von realen Rechten erhält, wobei die Anforderung zur Übertragung von realen Rechten mit virtuellen Vermögenswerten verknüpfte Daten der Navigationsausrüstung trägt und verwendet wird, um die Übertragung eines Nebenrechts der Navigationsausrüstung anzufordern, wobei ein Benutzer, der Eigentümer der Navigationsausrüstung ist, ein Nutzungsrecht an der Navigationsausrüstung hat, nachdem das Nebenrecht übertragen wurde, und die mit virtuellen Vermögenswerten verknüpften Daten von dem Benutzer, der Eigentümer der Navigationsausrüstung ist, gemäß einem Datenerstellungsrecht erzeugt werden;
ein Modul (12) zum Erhalten eines Satzes, das so konfiguriert ist, dass es einen intelligenten Vertrag gemäß der Anfrage zur Übertragung von realen Rechten auslöst und durch den intelligenten Vertrag einen Satz von zweiten Dienstknoten erhält, die der Anfrage zur Übertragung von realen Rechten entsprechen;
ein Modul zur Anweisungserstellung (13), das so konfiguriert ist, dass es einen Funktionsnamen zur Erkennung von Rechten und eine Anweisung zur Erkennung von Rechten gemäß einer Knotenidentität jedes Dienstknotens in der Menge der zweiten Dienstknoten und einem Datenzugriffsrecht für die mit dem virtuellen Vermögenswert verbundenen Daten erstellt;
ein Vertragseinsatzmodul (14), das so konfiguriert ist, dass es den Funktionsnamen zur Erkennung von Rechten und die Anweisung zur Erkennung von Rechten in dem intelligenten Vertrag einsetzt, um einen intelligenten Dienstvertrag zu erhalten; ein Funktionsaufrufmodul (15), das so konfiguriert ist, dass es den Funktionsnamen zur Erkennung von Rechten in dem intelligenten Dienstvertrag gemäß einer Datenzugriffsanforderung für die mit dem virtuellen Vermögenswert verbundenen Daten von einem ersten Zieldienstknoten aufruft, nachdem es die Datenzugriffsanforderung erhalten hat;
ein Erkennungsmodul von Rechten (16), das so konfiguriert ist, dass es das Datenzugriffsrecht des ersten Zieldienstknotens durch die Anweisung zur Erkennung von Rechten erkennt, die dem Namen der Funktion zur Erkennung von Rechten entspricht;
ein Datenlesemodul (17), das so konfiguriert ist, dass es feststellt, dass der erste Zieldienstknoten zu der Menge der zweiten Dienstknoten gehört, wenn es erkennt, dass der erste Zieldienstknoten das Datenzugriffsrecht für die mit dem virtuellen Vermögenswert verbundenen Daten hat, und die mit dem virtuellen Vermögenswert verbundenen Daten liest; und
ein Datenrückgabemodul (18), das so konfiguriert ist, dass es die gelesenen, mit einem virtuellen Vermögenswert verbundenen Daten an den ersten Zieldienstknoten zurückgibt.

12. Computervorrichtung, umfassend:
einen Speicher, der zum Speichern von Programmcodes konfiguriert ist;
eine Netzwerkschnittstelle, die so konfiguriert ist, dass sie eine Netzwerkkommunikationsfunktion bereitstellt; und einen Prozessor, der mit dem Speicher und der Netzwerkschnittstelle gekoppelt und so konfiguriert ist, dass er die Programmcodes aufruft, um das Verfahren nach einem der Ansprüche 1 bis 10 durchzuführen.

13. Computergestütztes Speichermedium, das so konfiguriert ist, dass es Computerprogramme speichert, die, wenn sie ausgeführt werden, mit einem Prozessor betrieben werden können, um das Verfahren nach einem der Ansprüche 1 bis 10 durchzuführen.

## Revendications

1. Procédé de traitement de données sur la base d'une chaîne de blocs, comprenant :
l'obtention (S101) d'une demande de transfert de droit réel envoyée par un premier noeud de service, dans lequel la demande de transfert de droit réel porte des données associées à un actif virtuel d'un équipement de navigation et est utilisée pour demander de transférer un droit subsidiaire de l'équipement de navigation, dans lequel un utilisateur qui est propriétaire de l'équipement de navigation a un droit d'utilisation de l'équipement de navigation après que le droit subsidiaire est transféré, et les données associées à un actif virtuel sont créées par l'utilisateur qui est propriétaire de l'équipement de navigation selon un droit de création de données ;
le déclenchement (S102) d'un contrat intelligent selon la demande de transfert de droit réel et l'obtention, par l'intermédiaire du contrat intelligent, d'un ensemble de deuxièmes noeuds de service correspondant à la demande de transfert de droit réel ;
la création (S103) d'un nom de fonction de détection de droit et d'une déclaration de détection de droit selon une identité de noeud de chaque noeud de service dans l'ensemble de deuxièmes noeuds de service et un droit d'accès de données pour les données associées à un actif virtuel, et le déploiement du nom de fonction de détection de droit et de la déclaration de détection de droit dans le contrat intelligent pour obtenir un contrat intelligent de service ;
l'appel (S104) du nom de fonction de détection de droit dans le contrat intelligent de service selon une demande d'accès de données pour les données associées à un actif virtuel depuis un premier noeud de service cible à l'obtention de la demande d'accès de données, et la détection d'un droit d'accès de données du premier noeud de service cible par l'intermédiaire de la déclaration de détection de droit correspondant au nom de fonction de détection de droit ; et
la détermination (S105) que le premier noeud de service cible appartient à l'ensemble de deuxièmes noeuds de service à la détection que le premier noeud de service cible a le droit d'accès de données pour les données associées à un actif virtuel, la lecture des données associées à un actif virtuel, et le retour des données associées à un actif virtuel lues au premier noeud de service cible.

2. Procédé selon la revendication 1, dans lequel les données associées à un actif virtuel comprennent en outre une signature numérique, la signature numérique est obtenue par la signature des données associées à un actif virtuel selon une clé privée du premier noeud de service, et le procédé comprend en outre :
l'obtention d'une clé publique du premier noeud de service, des données associées à un actif virtuel, et de la signature numérique ;
la vérification de la signature numérique des données associées à un actif virtuel selon la clé publique ; et la génération d'un premier bloc selon les données associées à un actif virtuel lorsque la signature numérique est une signature légale, et le passage au déclenchement du contrat intelligent selon la demande de transfert de droit réel, et l'obtention, par l'intermédiaire du contrat intelligent, de l'ensemble de deuxièmes noeuds de service correspondant à la demande de transfert de droit réel lorsque le premier bloc est ajouté avec succès à une chaîne de blocs, dans lequel la chaîne de blocs est une chaîne de blocs à laquelle le contrat intelligent appartient.

3. Procédé selon la revendication 1, dans lequel la création du nom de fonction de détection de droit et de la déclaration de détection de droit selon l'identité de noeud de chaque noeud de service dans l'ensemble de deuxièmes noeuds de service et le droit d'accès de données pour les données associées à un actif virtuel comprend :
la détermination, selon la demande de transfert de droit réel, qu'un type d'un contrat à créer correspondant à l'ensemble de deuxièmes noeuds de service est un type de contrat à interrogation de droit ;
l'obtention d'un modèle de code logique cible qui correspond au type de contrat à interrogation de droit depuis une bibliothèque de modèles de code, dans lequel la bibliothèque de modèles de code comprend des modèles de code logique correspondant à M types de contrat, les M types de contrat comprennent le type de contrat à interrogation de droit, M étant un entier positif ;
l'obtention de l'identité de noeud de chaque noeud de service dans l'ensemble de deuxièmes noeuds de service, l'utilisation de l'identité de noeud de chaque noeud de service dans l'ensemble de deuxièmes noeuds de service et d'un ensemble d'identités de données des données associées à un actif virtuel en tant qu'une variable, et la fusion de la variable et du modèle de code logique cible pour obtenir un code logique à interrogation de droit correspondant à des données d'actif virtuel ; et
la détermination du code logique à interrogation de droit en tant que la déclaration de détection de droit, et la configuration d'un nom de fonction de détection de droit correspondant pour la déclaration de détection de droit.

4. Procédé selon la revendication 1, dans lequel la détection du droit d'accès de données du premier noeud de service cible par l'intermédiaire de la déclaration de détection de droit correspondant au nom de fonction de détection de droit comprend :
l'interrogation d'un stockage de données associé aux données associées à un actif virtuel par l'intermédiaire de la déclaration de détection de droit, dans lequel le stockage de données est utilisé pour stocker l'identité de noeud de chaque noeud de service dans l'ensemble de deuxièmes noeuds de service ;
l'envoi d'une demande de lecture de données au stockage de données, et la réception de l'identité de noeud de chaque noeud de service dans l'ensemble de deuxièmes noeuds de service retournée par le stockage de données en réponse à la demande de lecture de données ;
la comparaison d'une identité de noeud de service du premier noeud de service cible à l'identité de noeud de chaque noeud de service dans l'ensemble de deuxièmes noeuds de service, et la diffusion d'un résultat de correspondance dans un réseau de consensus, de sorte qu'un noeud de consensus dans le réseau de consensus vote sur le résultat de correspondance ; et
la détection du droit d'accès de données du premier noeud de service cible selon le résultat de correspondance et d'un résultat de vote du noeud de consensus.

5. Procédé selon la revendication 4, dans lequel la détection du droit d'accès de données du premier noeud de service cible selon le résultat de correspondance et le résultat de vote du noeud de consensus comprend :
la détermination que le premier noeud de service cible a le droit d'accès de données pour les données associées à un actif virtuel lorsque le résultat de correspondance est un résultat de réussite de correspondance et le résultat de vote est un vote d'adoption ;
la détermination que le premier noeud de service cible n'a pas le droit d'accès de données pour les données associées à un actif virtuel lorsque le résultat de correspondance est un résultat de réussite de correspondance et le résultat de vote est un vote de non-adoption ;
la détermination que le premier noeud de service cible n'a pas le droit de données d'accès pour les données associées à un actif virtuel lorsque le résultat de correspondance est un résultat d'échec de correspondance et le résultat de vote est un vote d'adoption ; et
la détermination que le premier noeud de service cible a le droit d'accès de données pour les données associées à un actif virtuel lorsque le résultat de correspondance est un résultat d'échec de correspondance et le résultat de vote est un vote de non-adoption.

6. Procédé selon la revendication 1, dans lequel le premier noeud de service cible stocke des informations d'en-tête de bloc de chaque bloc dans la chaîne de blocs, et la chaîne de blocs est une chaîne de blocs à laquelle le contrat intelligent de service appartient ;
dans lequel le retour des données associées à un actif virtuel lues au premier noeud de service cible comprend :
l'obtention d'un bloc cible auquel les données associées à un actif virtuel appartiennent, l'obtention d'une valeur de hachage correspondante et d'un trajet d'arbre de Merkel dans le bloc cible, dans lequel la valeur de hachage comprend une première valeur de hachage des données associées à un actif virtuel et une deuxième valeur de hachage de données de transaction stockées dans le bloc cible, dans lequel les données de transaction sont différentes des données associées à un actif virtuel ; et
le retour de la valeur de hachage et du trajet d'arbre de Merkel au premier noeud de service cible, de sorte que le premier noeud de service cible génère une première racine d'arbre de Merkel selon la valeur de hachage et le trajet d'arbre de Merkel, compare la première racine d'arbre de Merkel à une deuxième racine d'arbre de Merkel dans un en-tête de bloc du bloc cible, et stocke les données associées à un actif virtuel lorsque le résultat de correspondance est que la première racine d'arbre de Merkel est la même que la deuxième racine d'arbre de Merkel.

7. Procédé selon la revendication 1, dans lequel la demande de transfert de droit réel comprend en outre une valeur d'actif virtuel appliquée ; et
dans lequel le procédé comprend en outre :
l'envoi de la demande de transfert de droit réel à l'ensemble de deuxièmes noeuds de service et la réception d'un message de confirmation de transfert de droit réel envoyé par un deuxième noeud de service cible, dans lequel l'ensemble de deuxièmes noeuds de service comprend le deuxième noeud de service cible ;
l'obtention d'une adresse de compte de l'utilisateur qui est propriétaire de l'équipement de navigation selon le message de confirmation de transfert de droit réel et l'envoi de l'adresse de compte au deuxième noeud de service cible, de sorte que le deuxième noeud de service cible transfère des données d'actif virtuel correspondant à la valeur d'actif virtuel appliquée à l'adresse de compte ;
la réception d'un message de confirmation de réception d'actif pour les données d'actif virtuel envoyées par le premier noeud de service et l'obtention d'une identité de noeud cible du deuxième noeud de service cible selon le message de confirmation de réception d'actif ; et
la création d'un nom de fonction de détection de droit cible et d'une déclaration de détection de droit cible selon l'identité de noeud cible et un droit de mise à jour de données pour les données associées à un actif virtuel, et le déploiement du nom de fonction de détection de droit cible et de la déclaration de détection de droit cible dans le contrat intelligent de service pour obtenir un contrat intelligent de service cible.

8. Procédé selon la revendication 7, comprenant en outre :
l'appel du nom de fonction de détection de droit cible dans le contrat intelligent de service cible selon une demande de mise à jour de données pour les données associées à un actif virtuel depuis un troisième noeud de service cible à l'obtention de la demande de mise à jour de données, dans lequel la demande de mise à jour de données porte des données de mise à jour, et les données de mise à jour sont utilisées pour mettre à jour les données associées à un actif virtuel ;
la détection d'un droit de mise à jour de données du troisième noeud de service cible par l'intermédiaire de la déclaration de détection de droit cible correspondant au nom de fonction de détection de droit cible ; et
la détermination que le troisième noeud de service cible est le même que le deuxième noeud de service cible à la détection que le troisième noeud de service cible a le droit de mise à jour de données pour les données associées à un actif virtuel, et la mise à jour des données associées à un actif virtuel selon les données de mise à jour.

9. Procédé selon la revendication 8, dans lequel la mise à jour des données associées à un actif virtuel selon les données de mise à jour comprend :
l'obtention d'une identité de données de mise à jour des données de mise à jour ;
l'obtention d'un ensemble d'identités de données des données associées à un actif virtuel, la comparaison de l'ensemble d'identités de données à l'identité de données de mise à jour, et l'obtention d'une identité de données cible correspondant à l'identité de données de mise à jour depuis l'ensemble d'identités de données ; et
l'obtention de données associées correspondant à l'identité de données cible depuis les données associées à un actif virtuel, et le remplacement des données associées correspondant à l'identité de données cible par les données de mise à jour.

10. Procédé selon la revendication 9, comprenant en outre :
la génération d'un enregistrement de mise à jour de données pour le troisième noeud de service cible et les données associées à un actif virtuel selon le troisième noeud de service cible, les données de mise à jour, et les données associées correspondant à l'identité de données cible ; et
la génération d'un deuxième bloc selon l'enregistrement de mise à jour de données, et l'ajout du deuxième bloc à la chaîne de blocs, dans lequel la chaîne de blocs est une chaîne de blocs à laquelle le contrat intelligent de service cible appartient.

11. Appareil de traitement de données sur la base d'une chaîne de blocs, comprenant :
un module d'obtention de demande (11) configuré pour obtenir une demande de transfert de droit réel envoyée par un premier noeud de service, dans lequel la demande de transfert de droit réel porte des données associées à un actif virtuel d'un équipement de navigation et est utilisée pour demander de transférer un droit subsidiaire de l'équipement de navigation, dans lequel un utilisateur qui est propriétaire de l'équipement de navigation a un droit d'utilisation de l'équipement de navigation après que le droit subsidiaire est transféré, et les données associées à un actif virtuel sont créées par l'utilisateur qui est propriétaire de l'équipement de navigation selon un droit de création de données ;
un module d'obtention d'ensemble (12) configuré pour déclencher un contrat intelligent selon la demande de transfert de droit réel et obtenir, par l'intermédiaire du contrat intelligent, un ensemble de deuxièmes noeuds de service correspondant à la demande de transfert de droit réel ;
un module de création de déclaration (13) configuré pour créer un nom de fonction de détection de droit et une déclaration de détection de droit selon une identité de noeud de chaque noeud de service dans l'ensemble de deuxièmes noeuds de service et un droit d'accès de données pour les données associées à un actif virtuel ;
un module de déploiement de contrat (14) configuré pour déployer le nom de fonction de détection de droit et la déclaration de détection de droit dans le contrat intelligent pour obtenir un contrat intelligent de service ;
un module d'appel de fonction (15) configuré pour appeler le nom de fonction de détection de droit dans le contrat intelligent de service selon une demande d'accès de données pour les données associées à un actif virtuel depuis un premier noeud de service cible à l'obtention de la demande d'accès de données ;
un module de détection de droit (16) configuré pour détecter un droit d'accès de données du premier noeud de service cible par l'intermédiaire de la déclaration de détection de droit correspondant au nom de fonction de détection de droit ;
un module de lecture de données (17) configuré pour déterminer que le premier noeud de service cible appartient à l'ensemble de deuxièmes noeuds de service à la détection que le premier noeud de service cible a le droit d'accès de données pour les données associées à un actif virtuel, et lire les données associées à un actif virtuel ; et
un module de retour de données (18) configuré pour retourner les données associées à un actif virtuel lues au premier noeud de service cible.

12. Dispositif informatique, comprenant :
une mémoire configurée pour stocker des codes de programmes ;
une interface de réseau configurée pour fournir une fonction de communication de réseau ; et
un processeur couplé à la mémoire et à l'interface de réseau et configuré pour invoquer les codes de programme pour réaliser le procédé selon l'une quelconque des revendications 1 à 10.

13. Support de stockage lisible par ordinateur, configuré pour stocker des programmes informatiques qui, lorsqu'ils sont exécutés, sont exploitables avec un processeur pour réaliser le procédé selon l'une quelconque des revendications 1 à 10.
